# EUROPEAN PATENT APPLICATION

(11) **EP 3 840 504 A1**
(43) Date of publication of application: **23.06.2021**
(21) Application number: 19862614.5
(22) Date of filing: 17.09.2019
(51) Int. Cl.: H04W 72/04, H04L 1/00

(54) **DATA TRANSMISSION METHOD AND COMMUNICATION APPARATUS**

(30) Priority: 17.09.2018 CN 201811084179
(71) Applicant: HUAWEI TECHNOLOGIES CO., LTD., Shenzhen, Guangdong 518129 (CN)
(72) Inventor: MA, Ruixiang, Shenzhen, Guangdong 518129 (CN); GUAN, Lei, Shenzhen, Guangdong 518129 (CN)
(74) Representative: Thun, Clemens
(86) International application number: PCT/CN2019/106170
(87) International publication number: WO 2020/057495

(57) **Abstract**

This application provides a data transmission method and a communications apparatus. A terminal device determines R first time domain resources, and a network device determines the R first time domain resources. The terminal device sends an uplink data channel to the network device on each of the R first time domain resources; and correspondingly, the network device receives, on each of the R first time domain resources, the uplink data channel sent by the terminal device. In this process, the uplink data channel sent by the terminal device on each of the R first time domain resources is the same. In this way, the terminal device repeatedly sends the uplink data channel for R times, and the network device repeatedly receives the uplink data channel for R times. Therefore, data transmission reliability is improved.

## Description

This application claims priority to Chinese Patent Application No. 201811084179.8, filed with the Chinese Patent Office on September 17, 2018 and entitled "DATA TRANSMISSION METHOD AND COMMUNICATIONS APPARATUS", which is incorporated herein by reference in its entirety.

### TECHNICAL FIELD

Embodiments of this application relate to the field of mobile communications technologies, and in particular, to a data transmission method and a communications apparatus.

### BACKGROUND

Currently, in a communication process, a network device performs data transmission with a terminal device in a scheduling manner and a scheduling-free manner. In the scheduling manner, a time domain resource table may be specified in a protocol or configured by using higher layer signaling, and the network device sends, to the terminal device, a physical downlink control channel (physical downlink control channel, PDCCH) that carries downlink control information (downlink control information, DCI). The DCI is used to indicate, to the terminal device, a time domain resource in a row in the time domain resource table. After receiving the PDCCH, on the time domain resource indicated by the DCI, the terminal device sends a physical uplink shared channel (physical uplink shared channel, PUSCH) to the network device; or the terminal device receives a physical downlink shared channel (physical downlink shared channel, PDSCH) sent by the network device. In the scheduling-free manner, the network device configures a time domain resource by using higher layer signaling, and the terminal device sends a PUSCH or receives a PDSCH on the time domain resource. To improve data scheduling reliability, in a data scheduling process, the network device may further configure an aggregation factor (aggregation factor, AF) for the terminal device. The aggregation factor is denoted as K, indicating that data is to be transmitted in K consecutive slots (slot). In other words, after determining the time domain resource in the foregoing two scheduling manners, the terminal device transmits the data in K consecutive slots each time. The data in each slot has a same start symbol and a same length (a same quantity of occupied symbols). That is, data repetition is at a slot level.

However, in ultra-reliable and low-latency communication (ultra-reliable and low-latency communication, URLLC), it is required that data transmission reliability reach 99.999% or even higher, a transmission latency be less than 1 millisecond, and instruction overheads be as low as possible. To satisfy a URLLC service requirement, supporting mini-slot (mini-slot) based repetition within a slot is proposed, where a quantity of symbols occupied by a mini-slot is less than a quantity of symbols occupied by the slot. The terminal device receives a PDSCH or sends a PUSCH within a slot based on a mini-slot-level repetition count R.

Clearly, a latency of mini-slot-level repetition is shorter than that of slot-level repetition. However, when the mini-slot-level repetition count is used, no resolution is proposed in the industry to determine R time domain resources to implement mini-slot-level data transmission.

### SUMMARY

This application provides a data transmission method and a communications apparatus, to determine R first time domain resources used for mini-slot-level data transmission, so as to implement the mini-slot-level data transmission.

According to a first aspect, an embodiment of this application provides a data transmission method. The method may be applied to a terminal device, or may be applied to a chip in a terminal device. The following describes the method by using an example in which the method is applied to the terminal device. The method includes:

The terminal device determines R first time domain resources, where R is a positive integer; and sends an uplink data channel or receives a downlink data channel on each of the R first time domain resources, where the uplink data channel sent on or the downlink data channel received on each of the R first time domain resources is the same. In this solution, a network device determines the R first time domain resources, and the terminal device determines the R first time domain resources. The network device sends the downlink data channel to the terminal device on each of the R first time domain resources; and correspondingly, the terminal device receives, on each of the R first time domain resources, the downlink data channel sent by the network device. In this process, the downlink data channel sent by the network device on each of the R first time domain resources is the same. In this way, the network device repeatedly sends the downlink data channel for R times, and the terminal device repeatedly receives the downlink data for R times. Therefore, data transmission reliability is improved. Alternatively, the terminal device determines the R first time domain resources, and the network device determines the R first time domain resources. The terminal device sends the uplink data channel to the network device on each of the R first time domain resources; and correspondingly, the network device receives, on each of the R first time domain resources, the uplink data channel sent by the terminal device. In this process, the uplink data channel sent by the terminal device on each of the R first time domain resources is the same. In this way, the terminal device repeatedly sends the uplink data channel for R times, and the network device repeatedly receives the uplink data channel for R times. Therefore, data transmission reliability is improved.

In a feasible design, when R≥2, a time domain interval between every two adjacent first time domain resources in the R first time domain resources is less than one slot, where the time domain interval is an interval between start symbols of every two adjacent first time domain resources. In this solution, the time domain interval between every two adjacent first time domain resources is set to be less than one slot (slot), so that more than one data transmission is implemented in one slot, that is, mini-slot-level repeat data transmission is implemented.

In a feasible design, before that the terminal device determines R first time domain resources, the method further includes: The terminal device determines one piece of first time domain resource information in at least one piece of first time domain resource information, where each of the at least one piece of first time domain resource information includes R and one piece of first indication information, and the first indication information is used to indicate a start symbol and a length of the 1^{st} first time domain resource in the R first time domain resources. In this solution, the terminal device determines one piece of first time domain resource information in the at least one piece of first time domain resource information, where the first time domain resource information includes R; and further determines the R first time domain resources based on R and the 1^{st} first time domain resource. In this way, the terminal device can determine the R first time domain resources. The first time domain resource information includes both R and indication information of the 1^{st} first time domain resource. In other words, R and the indication information of the 1^{st} first time domain resource can be indicated together by using only one piece of indication information. Therefore, compared with sending R pieces of indication information to separately indicate R and the indication information of the 1^{st} first time domain resource, this solution can reduce signaling overheads. Further, because the signaling overheads are reduced, signaling transmission reliability is improved.

In a feasible design, that the terminal device determines R first time domain resources includes: The terminal device determines one piece of second time domain resource information in at least one piece of second time domain resource information, where each of the at least one piece of second time domain resource information includes R pieces of first indication information, and each piece of first indication information is used to indicate a start symbol and a length of one of the R first time domain resources. In this solution, the terminal device determines one piece of second time domain resource information in the at least one piece of second time domain resource information, and determines the R first time domain resources based on the R pieces of first indication information included in the second time domain resource information. In this way, the terminal device determines the R first time domain resources. In addition, the second time domain resource information includes indication information of the R first time domain resources. In other words, the R first time domain resources can be indicated together by using only one piece of indication information. Therefore, compared with sending R pieces of indication information to respectively indicate the indication information of the R first time domain resources, this solution can reduce signaling overheads. Further, because the signaling overheads are reduced, signaling transmission reliability is improved.

In a feasible design, before that the terminal device determines R first time domain resources, the method further includes: The terminal device determines one piece of third time domain resource information in at least one piece of third time domain resource information, where each of the at least one piece of third time domain resource information includes one piece of first indication information, and the first indication information is used to indicate a start symbol and a length of the 1^{st} first time domain resource in the R first time domain resources; and determines R based on the start symbol and/or the length of the 1^{st} first time domain resource that are/is indicated by the first indication information. In this solution, the terminal device determines one piece of third time domain resource information in the at least one piece of third time domain resource information, and determines the R first time domain resources based on one piece of first indication information included in the third time domain resource information. In this way, the terminal device determines the R first time domain resources. The first time domain resource information includes only indication information of the 1^{st} first time domain resource. R may be implicitly determined based on the first time domain resource information and according to some predefined rules, to determine the R first time domain resources. Compared with directly sending R pieces of indication information to respectively indicate the R first time domain resources, this solution can reduce signaling overheads. Further, because the signaling overheads are reduced, signaling transmission reliability is improved.

In a feasible design, that the terminal device determines R first time domain resources includes: The terminal device receives a parameter sent by a network device, and the terminal device determines the R first time domain resources based on the parameter and first information, where the first information is any one of information required for communication between the terminal device and the network device. In this solution, the terminal device determines R in an implicit manner, and further determines the R first time domain resources based on R and the 1^{st} first time domain resource. In this way, the terminal device determines the R first time domain resources.

In a feasible design, before that the terminal device determines the R first time domain resources based on the parameter and first information, the method further includes: The terminal device determines, based on the first information, that the parameter indicates R, where R is equal to the parameter; or determines, based on the first information, that R is equal to 1. In this solution, the terminal device determines R based on the first information, and further determines the R first time domain resources based on R and the 1^{st} first time domain resource. In this way, the terminal device determines the R first time domain resources.

In a feasible design, the first information includes at least one of the following information: a downlink control information DCI format, a scrambling manner of a radio network temporary identity of DCI, a start symbol of the 1^{st} time domain resource in the R first time domain resources, a length of the 1^{st} time domain resource in the R first time domain resources, a mapping type of the 1^{st} time domain resource in the R first time domain resources, and indication information carried in higher layer signaling or DCI. In this solution, the first information is flexibly configured, so that the terminal device determines R based on the first information, and further determines the R first time domain resources based on R and the 1^{st} first time domain resource. In this way, the R first time domain resources are determined. Information related to the first information is necessary for normal communication between the network device and the terminal device. R is implicitly determined based on the first information, to determine the R first time domain resources. Therefore, compared with directly sending R pieces of indication information to respectively indicate indication information of the R first time domain resources, this solution can reduce signaling overheads. Further, because the signaling overheads are reduced, signaling transmission reliability is improved.

In a feasible design, the R first time domain resources are consecutive in time domain, or every two adjacent first time domain resources in the R first time domain resources are spaced by N symbols in time domain, where N is a positive integer. In this solution, the R first time domain resources are flexibly configured, to implement slot-level repetition based on mini-slot-level repetition.

In a feasible design, the method further includes: The terminal device determines a repetition count K, where the repetition count K indicates the terminal device to repeatedly send K groups of uplink data channels or repeatedly receive K groups of downlink data channels, and K is a positive integer; and determines K second time domain resources based on the repetition count K and the R first time domain resources, where each second time domain resource includes the R first time domain resources. In this solution, the terminal device repeatedly sends the K groups of uplink data channels or repeatedly receives the K groups of downlink data channels based on the repetition count K, to implement slot-level repetition based on mini-slot-level repetition. This further improves the data transmission reliability.

In a feasible design, that the terminal device determines K second time domain resources based on the repetition count K and the R first time domain resources includes: The terminal device repeats the R first time domain resources for K times in time domain, to obtain the K second time domain resources, where every two adjacent second time domain resources are consecutive in time domain; every two adjacent second time domain resources are spaced by N symbols in time domain, where N is a positive integer; or a time-domain location relationship between every two adjacent second time domain resources is preset. In this solution, the terminal device determines the K second time domain resources based on the repetition count K and the R first time domain resources, to send one group of uplink data channels or one group of downlink data channels on each of the K second time domain resources, so as to implement slot-level repetition based on mini-slot-level repetition. This further improves the data transmission reliability, and can ensure compatibility between a new communications system and an existing system.

In a feasible design, that the terminal device determines K second time domain resources based on the repetition count K and the R first time domain resources includes: The terminal device repeats the R first time domain resources for K times in time domain, where a K^{th} second time domain resource obtained through a K^{th} repetition belongs to two different slots; and the terminal device discards a time domain resource in the latter slot in the two different slots, and uses K-1 second time domain resources obtained through the 1^{st} to (K-1)^{th} repetitions and a remaining part of the K^{th} time domain resource as the K second time domain resources. In this solution, the terminal device determines the K second time domain resources based on the repetition count K and the R first time domain resources, to send one group of uplink data channels or one group of downlink data channels on each of the K second time domain resources, so as to implement slot-level repetition based on mini-slot-level repetition. This further improves the data transmission reliability, and can ensure compatibility between a new communications system and an existing system.

In a feasible design, that the terminal device repeatedly sends the uplink data channel for R times or repeatedly receives the downlink data channel for R times on the R first time domain resources includes: When at least one symbol included in an X^{th} first time domain resource collides with a symbol indicated by a slot format indicator SFI, the terminal device stops sending the uplink data channel or receiving the downlink data channel on the X^{th} first time domain resource; the terminal device postpones the X^{th} first time domain resource and a first time domain resource after the X^{th} first time domain resource; or the terminal device stops sending the uplink data channel or receiving the downlink data channel on a collision symbol included in the X^{th} first time domain resource, where the X^{th} first time domain resource is any one of the R first time domain resources. In this solution, when the symbol indicated by the SFI collides with at least one symbol in any first time domain resource, some rules are defined to ensure that a transmission direction of the repeatedly sent uplink data channel or the repeatedly received downlink data channel does not collide with a direction of the symbol indicated by the SFI. Therefore, algorithm complexity caused by the network device to ensure that no collision occurs is reduced.

According to a second aspect, an embodiment of this application provides a data transmission method. The method may be applied to a network device, or may be applied to a chip in a network device. The following describes the method by using an example in which the method is applied to the network device. The method includes: The network device determines R first time domain resources, where R is a positive integer; and sends a downlink data channel or receives an uplink data channel on each of the R first time domain resources, where the downlink data channel sent on or the uplink data channel received on each of the R first time domain resources is the same. In this solution, the network device determines the R first time domain resources, and a terminal device determines the R first time domain resources. The network device sends the downlink data channel to the terminal device on each of the R first time domain resources; and correspondingly, the terminal device receives, on each of the R first time domain resources, the downlink data channel sent by the network device. In this process, the downlink data channel sent by the network device on each of the R first time domain resources is the same. In this way, the network device repeatedly sends the downlink data channel for R times, and the terminal device repeatedly receives the downlink data for R times. Therefore, data transmission reliability is improved. Alternatively, the terminal device determines the R first time domain resources, and the network device determines the R first time domain resources. The terminal device sends the uplink data channel to the network device on each of the R first time domain resources; and correspondingly, the network device receives, on each of the R first time domain resources, the uplink data channel sent by the terminal device. In this process, the uplink data channel sent by the terminal device on each of the R first time domain resources is the same. In this way, the terminal device repeatedly sends the uplink data channel for R times, and the network device repeatedly receives the uplink data channel for R times. Therefore, data transmission reliability is improved.

In a feasible design, when R≥2, a time domain interval between every two adjacent first time domain resources in the R first time domain resources is less than one slot, where the time domain interval is an interval between start symbols of every two adjacent first time domain resources. In this solution, the time domain interval between every two adjacent first time domain resources is set to be less than one slot, so that more than one data transmission is implemented in one slot, that is, mini-slot-level repeat data transmission is implemented.

In a feasible design, before that the network device determines R first time domain resources, the method further includes: The network device determines one piece of first time domain resource information in at least one piece of first time domain resource information, where each of the at least one piece of first time domain resource information includes R and one piece of first indication information, and the first indication information is used to indicate a start symbol and a length of the 1^{st} first time domain resource in the R first time domain resources. In this solution, after determining the R first time domain resources, the network device indicates one piece of first time domain resource information to the terminal device in the scheduling or scheduling-free manner, where the first time domain resource information includes R, so that the terminal device determines the R first time domain resources based on R and the 1^{st} first time domain resource. In this way, the terminal device can determine the R first time domain resources. The first time domain resource information includes both R and indication information of the 1^{st} first time domain resource. In other words, R and the indication information of the 1^{st} first time domain resource can be indicated together by using only one piece of indication information. Therefore, compared with sending R pieces of indication information to separately indicate R and the indication information of the 1^{st} first time domain resource, this solution can reduce signaling overheads. Further, because the signaling overheads are reduced, signaling transmission reliability is improved.

In a feasible design, that the network device determines R first time domain resources includes: The network device determines one piece of second time domain resource information in at least one piece of second time domain resource information, where each of the at least one piece of second time domain resource information includes R pieces of first indication information, and the first indication information is used to indicate a start symbol and a length of one of the R first time domain resources. In this solution, the network device determines one piece of second time domain resource information in the at least one piece of second time domain resource information, and the second time domain resource information includes indication information of the R first time domain resources. In other words, the network device can indicate the R first time domain resources together by sending only one piece of indication information. Therefore, compared with sending R pieces of indication information to respectively indicate the indication information of the R first time domain resources, this solution can reduce signaling overheads. Further, because the signaling overheads are reduced, signaling transmission reliability is improved.

In a feasible design, before that the network device determines R first time domain resources, the method further includes: The network device determines one piece of third time domain resource information in at least one piece of third time domain resource information, where each of the at least one piece of third time domain resource information includes one piece of first indication information, the first indication information is used to indicate a start symbol and a length of the 1^{st} first time domain resource in the R first time domain resources, and the start symbol and the length are used to indicate R. In this solution, the network device determines one piece of third time domain resource information in the at least one piece of third time domain resource information, where the third time domain resource information indicates indication information of the 1^{st} first time domain resource in the R first time domain resources, and the indication information of the first time domain resource may be used to implicitly determine R. In other words, the network device can indicate the R first time domain resources together by sending only one piece of indication information indicating the 1^{st} first time-frequency resource. Therefore, compared with sending R pieces of indication information to respectively indicate indication information of the R first time domain resources, this solution can reduce signaling overheads. Further, because the signaling overheads are reduced, signaling transmission reliability is improved.

In a feasible design, that the network device determines R first time domain resources includes: The network device sends a parameter to the terminal device, and determines, based on first information, that the parameter indicates R, where R is equal to the parameter; or determines, based on first information, that R is equal to 1, where the first information is any one of information required for communication between the terminal device and the network device. In this solution, the network device sends one parameter, and then, sends one piece of information related to the first information, to implicitly indicate R. Because the information related to the first information is necessary for normal communication between the network device and the terminal device, two meanings of the first parameter can be implicitly determined based on the information. Compared with directly sending two parameters, this solution can reduce signaling overheads.

In a feasible design, the first information includes at least one of the following information: a downlink control information DCI format, a scrambling manner of a radio network temporary identity of DCI, a start symbol of the 1^{st} time domain resource in the R first time domain resources, a length of the 1^{st} time domain resource in the R first time domain resources, a mapping type of the 1^{st} time domain resource in the R first time domain resources, and indication information carried in higher layer signaling or DCI. In this solution, the first information is flexibly configured, so that the terminal device determines R based on the first information, and further determines the R first time domain resources based on R and the 1^{st} first time domain resource. In this way, the R first time domain resources are determined. The information related to the first information is necessary for normal communication between the network device and the terminal device. R is implicitly determined based on the first information, to determine the R first time domain resources. Therefore, compared with directly sending R pieces of indication information to respectively indicate indication information of the R first time domain resources, this solution can reduce signaling overheads. Further, because the signaling overheads are reduced, signaling transmission reliability is improved.

In a feasible design, the R first time domain resources are consecutive in time domain, or every two adjacent first time domain resources in the R first time domain resources are spaced by N symbols in time domain, where N is a positive integer. In this solution, the R first time domain resources are flexibly configured, to implement slot-level repetition based on mini-slot-level repetition.

In a feasible design, the method further includes: The network device determines a repetition count K, where the repetition count K indicates the network device to repeatedly send K groups of uplink data channels or repeatedly receive K groups of downlink data channels, and K is a positive integer; and the network device determines K second time domain resources based on the repetition count K and the R first time domain resources, where each second time domain resource includes the R first time domain resources. In this solution, the network device repeatedly sends the K groups of downlink data channels or repeatedly receives the K groups of uplink data channels based on the repetition count K, to implement slot-level repetition based on mini-slot-level repetition. This further improves data transmission reliability.

In a feasible design, that the network device determines K second time domain resources based on the repetition count K and the R first time domain resources includes: The network device repeats the R first time domain resources for K times in time domain, to obtain the K second time domain resources, where every two adjacent second time domain resources are consecutive in time domain; every two adjacent second time domain resources are spaced by N symbols in time domain, where N is a positive integer; or a time-domain location relationship between every two adjacent second time domain resources is preset. In this solution, the network device determines the K second time domain resources based on the repetition count K and the R first time domain resources, to send one group of downlink data channels or receive one group of uplink data channels on each of the K second time domain resources, so as to implement slot-level repetition based on mini-slot-level repetition. This further improves the data transmission reliability, and can ensure compatibility between a new communications system and an existing system.

In a feasible design, that the network device determines K second time domain resources based on the repetition count K and the R first time domain resources includes: The network device repeats the R first time domain resources for K times in time domain, where a K^{th} second time domain resource obtained through a K^{th} repetition belongs to two different slots; and the network device discards a time domain resource in the latter slot in the two different slots, and uses K-1 second time domain resources obtained through the 1^{st} to (K-1)^{th} repetitions and a remaining part of the K^{th} time domain resource as the K second time domain resources. In this solution, the network device determines the K second time domain resources based on the repetition count K and the R first time domain resources, to send one group of downlink data channels or receive one group of uplink data channels on each of the K second time domain resources, so as to implement slot-level repetition based on mini-slot-level repetition. This further improves the data transmission reliability, and can ensure compatibility between a new communications system and an existing system.

In a feasible design, that the network device repeatedly sends the downlink data channel for R times or repeatedly receives the uplink data channel for R times on the R first time domain resources includes: When at least one symbol included in an X^{th} first time domain resource collides with a symbol indicated by a slot format indicator SFI, the network device stops sending the downlink data channel or receiving the uplink data channel on the X^{th} first time domain resource; the network device postpones the X^{th} first time domain resource and a first time domain resource after the X^{th} first time domain resource; or the network device stops sending the downlink data channel or receiving the uplink data channel on a collision symbol included in the X^{th} first time domain resource, where the X^{th} first time domain resource is any one of the R first time domain resources. In this solution, some rules are defined to ensure that a transmission direction of the repeatedly sent downlink data channel or the repeatedly received uplink data channel does not collide with a direction of the symbol indicated by the SFI. Therefore, algorithm complexity caused by the network device to ensure that no collision occurs is reduced.

According to a third aspect, an embodiment of this application provides a communications apparatus. The communications apparatus has a function of implementing behavior of the terminal device in the foregoing method embodiments. The function may be implemented by hardware, or implemented by hardware executing corresponding software. The hardware or the software includes one or more modules corresponding to the foregoing function. The module may be software and/or hardware.

In a possible design, a structure of the terminal device includes a processor and a transceiver. The processor is configured to control the terminal device to determine R first time domain resources, and the transceiver is configured to send an uplink data channel or receive a downlink data channel on each of the R first time domain resources, where the uplink data channel sent on or the downlink data channel received on each of the R first time domain resources is the same.

According to a fourth aspect, an embodiment of this application provides a communications apparatus. The communications apparatus has a function of implementing behavior of the network device in the foregoing method embodiments. The function may be implemented by hardware, or implemented by hardware executing corresponding software. The hardware or the software includes one or more modules corresponding to the foregoing function.

In a possible design, a structure of the network device includes a processing module and a transceiver module. The processor is configured to control the network device to determine R first time domain resources, and the transceiver is configured to send an uplink data channel or receive a downlink data channel on each of the R first time domain resources, where the uplink data channel sent on or the downlink data channel received on each of the R first time domain resources is the same.

According to a fifth aspect, an embodiment of this application provides a communications apparatus, including a unit, module, or circuit configured to perform the method according to the first aspect or the possible implementations of the first aspect. The communications apparatus may be a terminal device, or may be a module applied to a terminal device, for example, may be a chip applied to the terminal device.

According to a sixth aspect, an embodiment of this application provides a communications apparatus, including a unit, module, or circuit configured to perform the method according to the second aspect or the possible implementations of the second aspect. The communications apparatus may be a network device, or may be a module applied to a network device, for example, may be a chip applied to the network device.

According to a seventh aspect, an embodiment of this application provides a computer program product including an instruction. When the computer program product runs on a computer, the computer is enabled to perform the method according to the first aspect or the possible implementations of the first aspect.

According to an eighth aspect, an embodiment of this application provides a computer program product including an instruction. When the computer program product runs on a computer, the computer is enabled to perform the method according to the second aspect or the possible implementations of the second aspect.

According to a ninth aspect, an embodiment of this application provides a computer-readable storage medium. The computer-readable storage medium stores an instruction. When the instruction is run on a computer, the computer is enabled to perform the method according to the first aspect or the possible implementations of the first aspect.

According to a tenth aspect, an embodiment of this application provides a computer-readable storage medium. The computer-readable storage medium stores an instruction. When the instruction is run on a computer, the computer is enabled to perform the method according to the second aspect or the possible implementations of the second aspect.

According to the data transmission method and the communications apparatus provided in the embodiments of this application, the network device determines the R first time domain resources, and the terminal device determines the R first time domain resources. The network device sends the downlink data channel to the terminal device on each of the R first time domain resources; and correspondingly, the terminal device receives, on each of the R first time domain resources, the downlink data channel sent by the network device. In this process, the downlink data channel sent by the network device on each of the R first time domain resources is the same. In this way, the network device repeatedly sends the downlink data channel for R times, and the terminal device repeatedly receives the downlink data for R times. Therefore, the data transmission reliability is improved. Alternatively, the terminal device determines the R first time domain resources, and the network device determines the R first time domain resources. The terminal device sends the uplink data channel to the network device on each of the R first time domain resources; and correspondingly, the network device receives, on each of the R first time domain resources, the uplink data channel sent by the terminal device. In this process, the uplink data channel sent by the terminal device on each of the R first time domain resources is the same. In this way, the terminal device repeatedly sends the uplink data channel for R times, and the network device repeatedly receives the uplink data channel for R times. Therefore, the data transmission reliability is improved.

### BRIEF DESCRIPTION OF DRAWINGS

FIG. 1 is a schematic diagram of a slot-level repeat transmission manner in a data transmission method;
FIG. 2 is a schematic diagram of a scenario to which a data transmission method is applicable according to an embodiment of this application;
FIG. 3A is a flowchart of a data transmission method according to an embodiment of this application;
FIG. 3B is a flowchart of another data transmission method according to an embodiment of this application;
FIG. 4A is a schematic diagram of an example of first time domain resources to which a data transmission method is applicable according to an embodiment of this application;
FIG. 4B is a schematic diagram of an example of first time domain resources to which another data transmission method is applicable according to an embodiment of this application;
FIG. 4C is a schematic diagram of an example of first time domain resources to which another data transmission method is applicable according to an embodiment of this application;
FIG. 4D is a schematic diagram of an example of first time domain resources to which another data transmission method is applicable according to an embodiment of this application;
FIG. 4E is a schematic diagram of an example of first time domain resources to which another data transmission method is applicable according to an embodiment of this application;
FIG. 4F is a schematic diagram of an example of first time domain resources to which another data transmission method is applicable according to an embodiment of this application;
FIG. 5 is a flowchart of another data transmission method according to an embodiment of this application;
FIG. 6A is a schematic diagram of an example of second time domain resources to which a data transmission method is applicable according to an embodiment of this application;
FIG. 6B is a schematic diagram of an example of second time domain resources to which another data transmission method is applicable according to an embodiment of this application;
FIG. 6C is a schematic diagram of an example of second time domain resources to which another data transmission method is applicable according to an embodiment of this application;
FIG. 6D is a schematic diagram of an example of second time domain resources to which another data transmission method is applicable according to an embodiment of this application;
FIG. 7 is a schematic diagram of an example of collision avoidance to which a data transmission method is applicable according to an embodiment of this application;
FIG. 8 is a schematic structural diagram of a communications apparatus according to an embodiment of this application;
FIG. 9 is a schematic structural diagram of a communications apparatus according to an embodiment of this application;
FIG. 10 is a schematic structural diagram of a communications apparatus according to an embodiment of this application; and
FIG. 11 is a schematic structural diagram of a communications apparatus according to an embodiment of this application.

### DESCRIPTION OF EMBODIMENTS

In a communication process, a network device performs data transmission with a terminal device in a scheduling manner and a scheduling-free manner. The two scheduling manners are described in detail in the following.

### 1. Scheduling manner:

When data is scheduled in the scheduling manner, for downlink data scheduling or uplink data scheduling, at least one time domain resource table is specified in a protocol or configured by using higher layer signaling. The network device sends a PDCCH to the terminal device, where DCI included in the PDCCH is used to indicate, to a user, a time domain resource in a row in one time domain resource table. After receiving the PDCCH, on the time domain resource indicated by the DCI, the terminal device sends a PUSCH to the network device or receives a PDSCH sent by the network device. In addition, the terminal device determines, according to a rule predefined in the protocol, the time domain resource table in the at least one time domain resource table.

For example, the time domain resource table specified in the protocol includes 16 rows, and a parameter included in each row includes at least one of the following parameters: a start symbol (S), a length (L), a PDSCH or PUSCH mapping type (mapping type), and a slot location parameter K0 or K2. S indicates a start symbol of a time domain resource; L indicates a quantity of symbols occupied by the time domain resource, namely, a quantity of consecutive symbols starting from S; K0 exists in a time domain resource table used for downlink data scheduling, and is used to indicate a quantity of slots (slot) in an interval between a time point at which the terminal device receives the PDCCH and a time point at which the network device sends the PDSCH, and K2 exists in a time domain resource table used for uplink data scheduling, and indicates a quantity of slots in an interval between the time point at which the terminal device receives the PDCCH and a time point at which the terminal device sends the PUSCH; and the PDSCH mapping type exists in the time domain resource table used for downlink data scheduling, and the PUSCH mapping type exists in the time domain resource table used for uplink data scheduling, where the mapping type has two candidate values: a type A and a type B, the type A indicates that the first demodulation reference signal (demodulation reference signal, DMRS) is located in the third or fourth symbol in a slot, and the type B indicates that the first DMRS is located in the first symbol at the beginning of data.

For example, the time domain resource table configured by using the higher layer signaling includes a maximum of 16 rows, and a parameter included in each row includes at least one of the following: a start and length indicator value (start and length indicator, SLIV), a slot location K0 or K2, and a PDSCH mapping type. The SLIV is obtained by jointly encoding the foregoing S and L, and one SLIV may be used to determine a unique group of S and L. A joint encoding manner is specifically as follows: When a result of subtracting 1 from the length L is less than or equal to 7, SLIV=14×(L-1)+S; or when a result of subtracting 1 from the length L is greater than 7, SLIV=14×(14-L+1)+(14-1+S). In this process, 0<L≤14-S. S is a value of the start symbol. For example, if the start symbol is a symbol 3, 3 is added herein.

For the slot location K0 or K2 and the PDSCH or PUSCH mapping type, refer to the description of the foregoing time domain resource table specified in the protocol. Details are not described herein again.

### 2. Scheduling-free manner:

When data is scheduled in the scheduling-free manner, for downlink data scheduling or uplink data scheduling, at least one time domain resource table is specified in a protocol or configured by using higher layer signaling. The network device sends one piece of configuration information to the terminal device, to indicate a time domain resource in a row in one time domain resource table, and the terminal device sends a PUSCH or receives a PDSCH on the time domain resource in the row. The terminal device determines, according to a rule predefined in the protocol, the time domain resource table in the at least one time domain resource table. For a parameter included in each row in the time domain resource table, refer to the foregoing scheduling manner. A difference lies in that the slot location parameter K0 or K2 does not function in actual data scheduling.

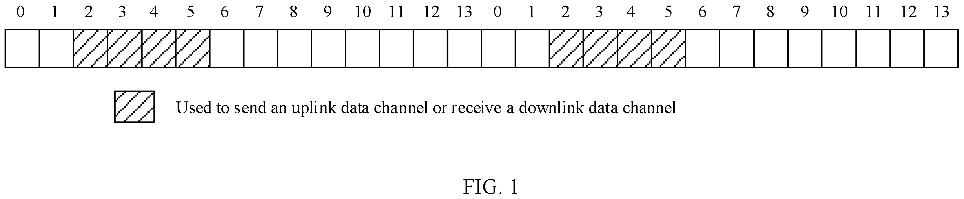

Based on the foregoing two manners, the terminal device can determine a start symbol and a length of a time domain resource for sending an uplink data channel or receiving a downlink data channel. When an aggregation factor is configured for the terminal device, assuming that the aggregation factor is K, the terminal device sends the uplink data channel or receives the downlink data channel in K consecutive slots, and a start symbol and a length of a time domain resource in each slot are the start symbol and the length that are determined in the foregoing two manners. This manner of sending the uplink data channel or receiving the downlink data channel is referred to as a slot-level repeat transmission manner. Specifically, FIG. 1 is a schematic diagram of a slot-level repeat transmission manner in a data transmission method.

Referring to FIG. 1, it is assumed that a start symbol is a symbol 2, a length is 4 (in other words, four symbols are occupied), and K=2. In either a slot 1 or a slot 2, a time domain resource starts from the symbol 2, and includes the symbol 2, a symbol 3, a symbol 4, and a symbol 5.

To satisfy a URLLC service requirement, supporting mini-slot (mini-slot) based repetition within a slot is considered, where a quantity of symbols occupied by a mini-slot is less than a quantity of symbols occupied by the slot. The terminal device sends the uplink data channel or receives the downlink data channel in one slot based on a mini-slot-level repetition count R. In this case, no solution is proposed in the industry to determine R time domain resources to implement mini-slot-level data transmission.

In view of this, embodiments of this application provide a data transmission method and a communications apparatus, to implement mini-slot-level data transmission.

The data transmission method provided in the embodiments of this application may be applied to a 3rd generation mobile communications (the 3rd Generation Mobile Communication, 3G) system, a long term evolution (Long Term Evolution, LTE) system, a 4th generation mobile communications (the 4th Generation Mobile Communication, 4G) system, a long term evolution-advanced (Advanced long term evolution, LTE-A) system, a 3rd generation partnership project (The 3rd Generation Partnership Project, 3GPP) related cellular system, a 5th generation mobile communications (the 5th Generation Mobile Communication, 5G) system, and a subsequent evolved communications system.

The network device in the embodiments of this application may be a base station, for example, a macro base station or a micro base station, and is a device that is deployed in a radio access network and that can perform wireless communication with the terminal device. The base station may be configured to mutually convert a received over-the-air frame and an IP packet, and serve as a router between the terminal device and a remaining part of the access network, where the remaining part of the access network may include an internetwork protocol (IP) network. The base station may further coordinate attribute management on an air interface. For example, the base station may be a base transceiver station (base transceiver station, BTS) in a global system for mobile communications (global system for mobile communication, GSM) or code division multiple access (code division multiple access, CDMA), may be a NodeB (NodeB) in wideband code division multiple access (wideband code division multiple access, WCDMA), may be an evolved NodeB (eNB, e-NodeB, or evolutional NodeB) in LTE, or may be a gNB in NR. Alternatively, the base station may be a radio controller in a cloud radio access network (cloud radio access network, CRAN) scenario, or may be a relay station, an access point, a vehicle-mounted device, a wearable device, a network device in a 5G network, a network device in a future evolved PLMN network, or the like. This is not limited in the embodiments of this application.

The terminal device in the embodiments of this application may be a device that provides a user with voice and/or data connectivity, a handheld device with a radio connection function, or another processing device connected to a wireless modem. The terminal device may communicate with one or more core networks through a radio access network (radio access network, RAN). The terminal device may be a mobile terminal device, such as a mobile phone (also referred to as a "cellular" phone) or a computer with a mobile terminal device, for example, may be a portable, pocket-sized, handheld, computer built-in, or vehicle-mounted mobile apparatus, which exchanges voice and/or data with the radio access network. For example, the terminal device may be a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G network, a terminal device in a future evolved public land mobile network (public land mobile network, PLMN), or the like. This is not limited in the embodiments of this application. The terminal device may also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal device (access terminal), a user terminal device (user terminal), a user agent (user agent), a user device (user device), or user equipment (user equipment).

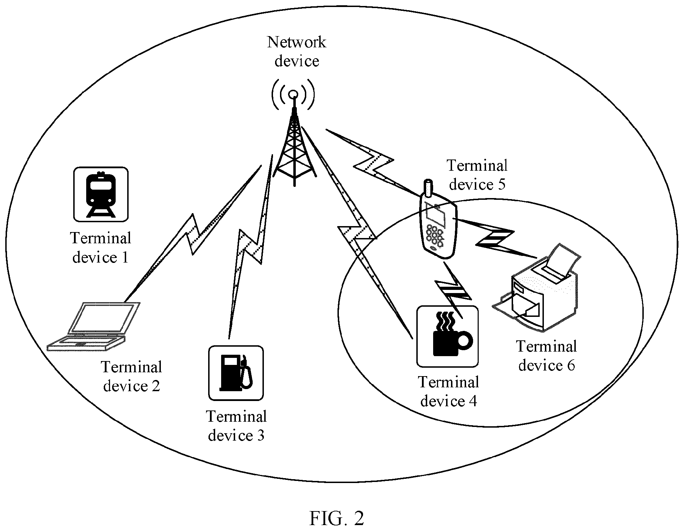

FIG. 2 is a schematic diagram of a scenario to which a data transmission method is applicable according to an embodiment of this application. Referring to FIG. 2, a network device and a terminal device 1 to a terminal device 6 form a communications system. In the communications system, any of the terminal device 1 to the terminal device 6 determines R first time domain resources, and on each of the R first time domain resources, sends an uplink data channel to the network device or receives a downlink data channel sent by the network device, where the uplink data channel sent on or the downlink data channel received on each of the R first time domain resources is the same. Alternatively, the network device determines R first time domain resources, and on each of the R first time domain resources, sends a downlink data channel to the terminal device or receives an uplink data channel sent by the terminal device, where the uplink data channel received on or the downlink data channel sent on each of the R first time domain resources is the same. In addition, the terminal device 4 to the terminal device 6 also form a communications system. In the communications system, the terminal device 5 determines R first time domain resources, and on each of the R first time domain resources, sends a downlink data channel to either the terminal device 4 or the terminal device 6, or receives an uplink data channel sent by either the terminal device 4 or the terminal device 6, where the uplink data channel received on or the downlink data channel sent on each of the R first time domain resources is the same. Alternatively, either the terminal device 4 or the terminal device 6 determines R first time domain resources, and on each of the R first time domain resources, sends an uplink data channel to the terminal device 5 or receives a downlink data channel sent by the terminal device 5, where the uplink data channel sent on or the downlink data channel received on each of the R first time domain resources is the same.

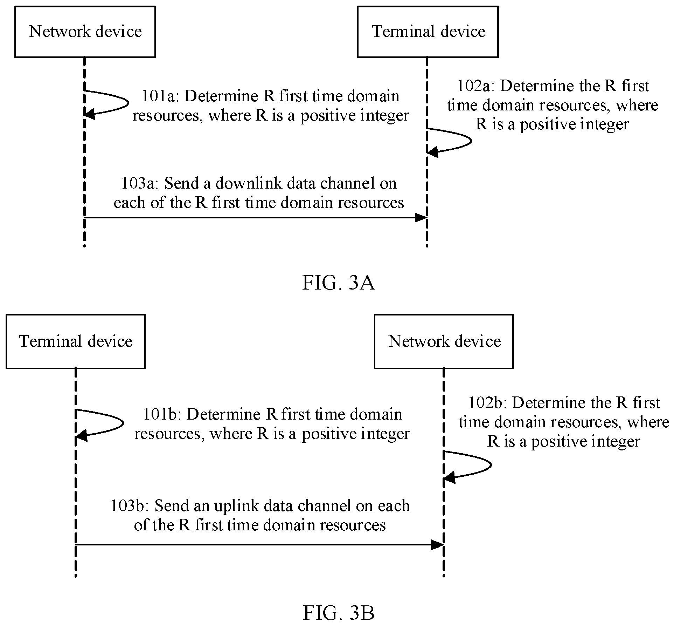

The following describes in detail the data transmission method according to this application based on the scenario shown in FIG. 2. Specifically, refer to FIG. 3A and FIG. 3B. FIG. 3A is a flowchart of a data transmission method according to an embodiment of this application. This embodiment describes the data transmission method according to this application from a perspective in which a network device sends a downlink data channel to a terminal device. This embodiment includes the following steps.

101a: The network device determines R first time domain resources, where R is a positive integer.

In this step, the network device determines the R first time domain resources based on a protocol specification, or the network device determines the R first time domain resources based on a specific scheduling algorithm. How the network device determines the R first time domain resources is not limited in this application. For example, the network device determines the R first time domain resources based on a time domain resource table specified in a protocol.

After determining the R first time domain resources, the network device indicates the R first time domain resources to the terminal device in a scheduling manner or a scheduling-free manner.

For example, when the network device indicates the R first time domain resources to the terminal device in the scheduling manner, the network device sends a PDCCH to the terminal device. For example, DCI carried in the PDCCH indicates one row in one time domain resource table, so that the R first time domain resources can be indicated to the terminal device. One time domain resource table corresponding to the DCI is one of at least one time domain resource table specified in the protocol and/or configured by using higher layer signaling. The specific time domain resource table in the at least one time domain resource table is determined according to a predefined rule, and the network device and the terminal device may uniquely determine one same time domain resource table according to the rule.

For example, when the network device indicates the R first time domain resources to the terminal device in the scheduling-free manner, the network device sends higher layer signaling to the terminal device. For example, the higher layer signaling indicates one row in one time domain resource table, so that the R first time domain resources can be indicated to the terminal device. One time domain resource table corresponding to the higher layer signaling is one of at least one time domain resource table specified in the protocol and/or configured by using the higher layer signaling. The specific time domain resource table in the at least one time domain resource table is determined according to a predefined rule, and the network device and the terminal device may uniquely determine one same time domain resource table according to the rule.

In this embodiment of this application, the higher layer signaling may be signaling sent by a higher-layer protocol layer, and the higher-layer protocol layer is at least one protocol layer above a physical layer. The higher-layer protocol layer may specifically include at least one of the following protocol layers: a medium access control (medium access control, MAC) layer, a radio link control (radio link control, RLC) layer, a packet data convergence protocol (packet data convergence protocol, PDCP) layer, a radio resource control (radio resource control, RRC) layer, a non-access stratum (non-access stratum, NAS), and the like.

102a: The terminal device determines the R first time domain resources, where R is a positive integer.

In this step, the terminal device determines the R first time domain resources in the scheduling manner or the scheduling-free manner.

For example, when determining the R first time domain resources in the scheduling manner, the terminal device receives the PDCCH sent by the network device. For example, the DCI carried in the PDCCH indicates one row in one time domain resource table. The terminal device determines the R first time domain resources based on the DCI carried in the PDCCH and the time domain resource table. One time domain resource table corresponding to the DCI is one of the at least one time domain resource table specified in the protocol and/or configured by using the higher layer signaling. The specific time domain resource table in the at least one time domain resource table is determined according to the predefined rule, and the network device and the terminal device may uniquely determine one same time domain resource table according to the rule.

For example, when determining the R first time domain resources in the scheduling-free manner, the terminal device receives the higher layer signaling sent by the network device. For example, the higher layer signaling indicates one row in one time domain resource table. The terminal device determines the R first time domain resources based on the higher layer signaling and the time domain resource table. One time domain resource table corresponding to the higher layer signaling is one of the at least one time domain resource table specified in the protocol and/or configured by using the higher layer signaling. The specific time domain resource table in the at least one time domain resource table is determined according to the predefined rule, and the network device and the terminal device may uniquely determine one same time domain resource table according to the rule.

103a: The network device sends the downlink data channel on each of the R first time domain resources.

The downlink data channel sent on each of the R first time domain resources is the same.

In this step, the network device sends the downlink data channel to the terminal device on each of the R first time domain resources; and correspondingly, the terminal device receives, on each of the R first time domain resources, the downlink data channel sent by the network device. In this process, the downlink data channel sent by the network device on each of the R first time domain resources is the same; and correspondingly, the downlink data channel received by the terminal device on each of the R first time domain resources is also the same. In this way, the network device repeatedly sends the downlink data channel for R times, and the terminal device repeatedly receives the downlink data channel for R times.

According to the data transmission method provided in this embodiment of this application, the network device determines the R first time domain resources, and the terminal device determines the R first time domain resources. The network device sends the downlink data channel to the terminal device on each of the R first time domain resources; and correspondingly, the terminal device receives, on each of the R first time domain resources, the downlink data channel sent by the network device. In this process, the downlink data channel sent by the network device on each of the R first time domain resources is the same. In this way, the network device repeatedly sends the downlink data channel for R times, and the terminal device repeatedly receives the downlink data for R times. Therefore, data transmission reliability is improved.

FIG. 3B is a flowchart of another data transmission method according to an embodiment of this application. This embodiment describes the data transmission method according to this application from a perspective in which a network device receives an uplink data channel sent by a terminal device. This embodiment includes the following steps.

101b: The terminal device determines R first time domain resources, where R is a positive integer.

For details, refer to the foregoing description of step 102a. Details are not described herein again.

102b: The network device determines the R first time domain resources, where R is a positive integer.

For details, refer to the foregoing description of step 101a. Details are not described herein again.

103b: The terminal device sends the uplink data channel on each of the R first time domain resources.

The uplink data channel sent on each of the R first time domain resources is the same.

In this step, the terminal device sends the uplink data channel to the network device on each of the R first time domain resources; and correspondingly, the network device receives, on each of the R first time domain resources, the uplink data channel sent by the terminal device. In this process, the uplink data channel sent by the terminal device on each of the R first time domain resources is the same; and correspondingly, the uplink data channel received by the network device on each of the R first time domain resources is also the same. In this way, the terminal device repeatedly sends the uplink data channel for R times and the network device repeatedly receives the uplink data channel for R times.

According to the data transmission method provided in this embodiment of this application, the terminal device determines the R first time domain resources, and the network device determines the R first time domain resources. The terminal device sends the uplink data channel to the network device on each of the R first time domain resources; and correspondingly, the network device receives, on each of the R first time domain resources, the uplink data channel sent by the terminal device. In this process, the uplink data channel sent by the terminal device on each of the R first time domain resources is the same. In this way, the terminal device repeatedly sends the uplink data channel for R times, and the network device repeatedly receives the uplink data channel for R times. Therefore, data transmission reliability is improved.

The following describes in detail the R first time domain resources in the foregoing embodiments.

In a feasible implementation, when R≥2, a time domain interval between every two adjacent first time domain resources in the R first time domain resources is less than one slot, where the time domain interval is an interval between start symbols of every two adjacent first time domain resources.

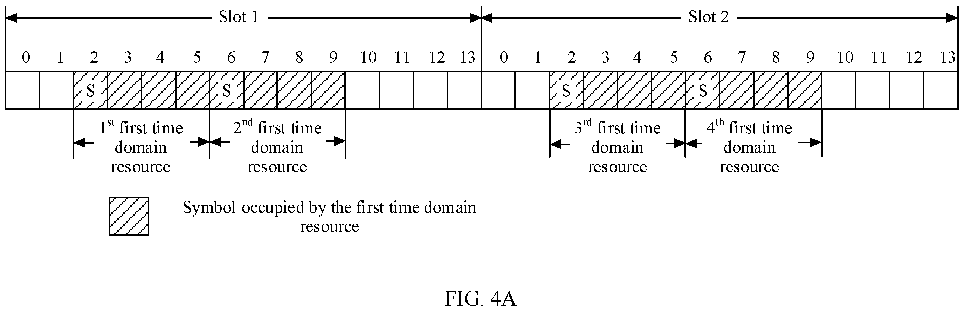

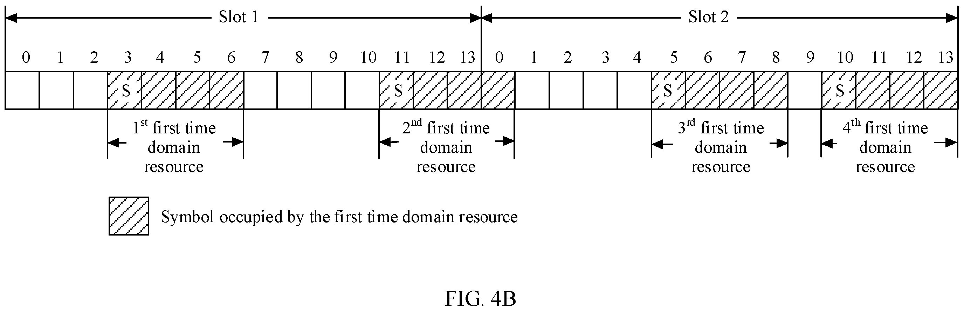

Specifically, when R≥2, a slot interval between every two adjacent first time domain resources in the R first time domain resources is less than one slot. The following describes in detail the time domain interval by using an example in which one slot includes 14 symbols. For details, refer to FIG. 4A and FIG. 4B.

FIG. 4A is a schematic diagram of an example of first time domain resources to which a data transmission method is applicable according to an embodiment of this application. Referring to FIG. 4A, there are four first time domain resources in total, and each first time domain resource occupies four symbols. In the figure, "S" is used to identify a start symbol of each first time domain resource. A start symbol of the 1^{st} first time domain resource is a symbol 2 in a slot 1, a start symbol of the 2^{nd} second time domain resource is a symbol 6 in the slot 1, a start symbol of the 3^{rd} time domain resource is a symbol 2 in a slot 2, and a start symbol of the 4^{th} second time domain resource is a symbol 6 in the slot 2. The start symbol of the 1^{st} first time domain resource and the start symbol of the 2^{nd} first time domain resource are spaced by four symbols: the symbol 2 to a symbol 5 in the slot 1. The start symbol of the 2^{nd} first time domain resource and the start symbol of the 3^{rd} first time domain resource are spaced by 10 symbols: the symbol 6 to a symbol 13 in the slot 1, and a symbol 0 and a symbol 1 in the slot 2. The start symbol of the 3^{rd} first time domain resource and the start symbol of the 4^{th} first time domain resource are spaced by four symbols: the symbol 2 to a symbol 5 in the slot 2. It can be learned that the interval between the start symbols of every two adjacent first time domain resources is less than 14 symbols, namely, one slot.

FIG. 4B is a schematic diagram of an example of first time domain resources to which another data transmission method is applicable according to an embodiment of this application. Referring to FIG. 4B, there are four first time domain resources in total, and each first time domain resource occupies four symbols. In the figure, "S" is used to identify a start symbol of each first time domain resource. A start symbol of the 1^{st} first time domain resource is a symbol 3 in a slot 1, a start symbol of the 2^{nd} second time domain resource is a symbol 11 in the slot 1, a start symbol of the 3^{rd} time domain resource is a symbol 5 in a slot 2, and a start symbol of the 4^{th} second time domain resource is a symbol 10 in the slot 2. The start symbol of the 1^{st} first time domain resource and the start symbol of the 2^{nd} first time domain resource are spaced by eight symbols: the symbol 3 to a symbol 10 in the slot 1. The start symbol of the 2^{nd} first time domain resource and the start symbol of the 3^{rd} first time domain resource are spaced by eight symbols: the symbol 11 to a symbol 13 in the slot 1, and a symbol 0 to a symbol 4 in the slot 2. The start symbol of the 3^{rd} first time domain resource and the start symbol of the 4^{th} first time domain resource are spaced by five symbols: the symbol 5 to a symbol 9 in the slot 2. It can be learned that an interval between start symbols of every two adjacent first time domain resources is less than 14 symbols, namely, one slot.

In this embodiment, the time domain interval between every two adjacent first time domain resources is set to be less than one slot, so that more than one data transmission is implemented in one slot, that is, mini-slot-level repeat data transmission is implemented.

It should be noted that, in the foregoing embodiments, the time domain interval is the interval between the start symbols of every two adjacent first time domain resources. However, this is not limited in the embodiments of this application. For example, the time domain interval may alternatively be an interval between end symbols of every two adjacent first time domain resources. For example, in FIG. 4A, the last symbol (namely, the end symbol) of the 1^{st} first time domain resource is the symbol 5 in the slot 1, and the last symbol of the 2^{nd} first time domain resource is a symbol 9 in the slot 1. In this case, the time domain interval is four symbols: the symbol 5 to a symbol 8. For another example, the time domain interval may alternatively be an interval between an end symbol of a former first time domain resource and a start symbol of a latter first time domain resource in every two adjacent first time domain resources. For example, in FIG. 4B, an end symbol of the 1^{st} first time domain resource is the symbol 6, and the start symbol of the 2^{nd} first time domain resource is the symbol 11. In this case, the time domain interval is five symbols: the symbol 6 to the symbol 10.

The following describes in detail how the terminal device determines the R first time domain resources to send the uplink data channel or receive the downlink data channel on each of the R first time domain resources in the foregoing embodiment.

In a feasible implementation, before determining the R first time domain resources, the terminal device further determines one piece of first time domain resource information in at least one piece of first time domain resource information, where each of the at least one piece of first time domain resource information includes R and one piece of first indication information, and the first indication information is used to indicate a start symbol and a length of the 1^{st} first time domain resource in the R first time domain resources.

Specifically, the at least one piece of first time domain resource information may be specified in a protocol or configured by the network device for the terminal device by using higher layer signaling. The terminal device determines one piece of first time domain resource information in the at least one piece of first time domain resource information in a scheduling manner or a scheduling-free manner. Then, the terminal device determines R and the first indication information based on the determined first time domain resource information. Finally, the terminal device determines the start symbol and the length of the 1^{st} first time domain resource based on the first indication information, and determines the R first time domain resources based on R and the 1^{st} first time domain resource.

During specific implementation, for example, the at least one piece of first time domain resource information may be included in one time domain resource table. The time domain resource table may be one of at least one time domain resource table specified in a protocol or configured by using higher layer signaling. The specific time domain resource table in the at least one time domain resource table is determined according to a predefined rule. Each row in the time domain resource table corresponds to one piece of first time domain resource information, and parameters included in the first time domain resource information include at least the first indication information and R. The terminal device determines, in the scheduling manner or the scheduling-free manner, one piece of first time domain resource information in the at least one piece of first time domain resource information included in the time domain resource table, and determines R and the first indication information based on the first time domain resource information.

First, the scheduling manner is described.

When the terminal device performs data transmission with the network device in the scheduling manner, the network device sends a PDCCH to the terminal device, where DCI included in the PDCCH is used to indicate, to a user, one piece of first time domain resource information in one time domain resource table. After receiving the PDCCH, the terminal device determines one piece of first time domain resource information based on the DCI in the PDCCH, determines the R first time domain resources based on the first time domain resource information, and on each of the R first time domain resources, sends the uplink data channel to the network device or receives the downlink data channel sent by the network device. One time domain resource table is one of the at least one time domain resource table specified in the protocol or configured by using the higher layer signaling. The specific time domain resource table in the at least one time domain resource table is determined according to the predefined rule.

The time domain resource table specified in the protocol includes 16 rows, each row corresponds to one piece of first time domain resource information, the first time domain resource information includes at least R and first indication information, and the first indication information indicates a start symbol (S) and a length (L). In addition, the first time domain resource information may further include a slot location parameter K0 or K2, a PDSCH or PUSCH mapping type (mapping type), and the like. R indicates a quantity of first time domain resources, or a mini-slot-level repetition count; S indicates a start symbol of the 1^{st} first time domain resource; L indicates a quantity of symbols occupied by the 1^{st} first time domain resource, namely, a quantity of consecutive symbols starting from S; K0 exists in a time domain resource table used for downlink data scheduling, and is used to indicate a quantity of slots (slot) in an interval between a time point at which the terminal device receives the PDCCH and a time point at which the network device sends a PDSCH, and K2 exists in a time domain resource table used for uplink data scheduling, and indicates a quantity of slots in an interval between the time point at which the terminal device receives the PDCCH and a time point at which the terminal device sends a PUSCH; and the PDSCH mapping type exists in the time domain resource table used for downlink data scheduling, and the PUSCH mapping type exists in the time domain resource table used for downlink data scheduling, where the mapping type has two candidate values: a type A and a type B, the type A indicates that the first DMRS is located in the third or fourth symbol in a slot, and the type B indicates that the first DMRS is located in the first symbol at the beginning of data.

The time domain resource table configured by using the higher layer signaling has a maximum of 16 rows, each row corresponds to one piece of first time domain resource information, the first time domain resource information includes at least R and first indication information, the first indication information indicates a start and length indicator (start and length indicator, SLIV), and R indicates a quantity of first time domain resources, or a mini-slot-level repetition count. In addition, the first time domain resource information may further include a slot location parameter K0 or K2, a PDSCH or PUSCH mapping type, and the like. The SLIV is obtained by jointly encoding the foregoing S and L, and one SLIV may be used to determine a unique group of S and L. S in the group of S and L indicates a start symbol of the 1^{st} first time domain resource; and L indicates a quantity of symbols occupied by the 1^{st} first time domain resource, namely, a quantity of consecutive symbols starting from S.

Then, the scheduling-free manner is described.

When the terminal device performs data transmission with the network device in the scheduling-free manner, the terminal device receives higher layer signaling sent by the network device, where the higher layer signaling indicates one piece of first time domain resource information in one time domain resource table. The terminal device determines one piece of first time domain resource information based on the higher layer signaling, determines the R first time domain resources based on the first time domain resource information, and on each of the R first time domain resources, sends the uplink data channel to the network device or receives the downlink data channel sent by the network device. The time domain resource table is one of the at least one time domain resource table specified in the protocol or configured by using the higher layer signaling. The specific time domain resource table in the at least one time domain resource table is determined according to the predefined rule.

Content of the time domain resource table specified in the protocol or configured by using the higher layer signaling and the first time domain resource information is the same as that in the scheduling manner. Details are not described again.

The following describes how to determine the R first time domain resources based on R and the 1^{st} first time domain resource.

In a feasible implementation, the R first time domain resources are consecutive in time domain. To be specific, the 2^{nd} first time domain resource immediately follows an end symbol of the 1^{st} first time domain resource. In other words, a symbol next to the end symbol of the 1^{st} first time domain resource is a start symbol of the 2^{nd} first time domain resource. The 3^{rd} first time domain resource immediately follows an end symbol of the 2^{nd} time domain resource. The rest can be deduced by analogy, so that the R first time domain resources are determined. Alternatively, every two adjacent first time domain resources in the R first time domain resources are spaced by N symbols in time domain, where N is a positive integer. N is configured by using higher layer signaling or is predefined. To be specific, the 2^{nd} time domain resource is determined at an interval of N symbols from the 1^{st} time domain resource. The rest can be deduced by analogy, so that the R first time domain resources are determined.

Optionally, whether the R first time domain resources are consecutive or are spaced by N symbols is configured by using higher layer signaling, or is predefined.

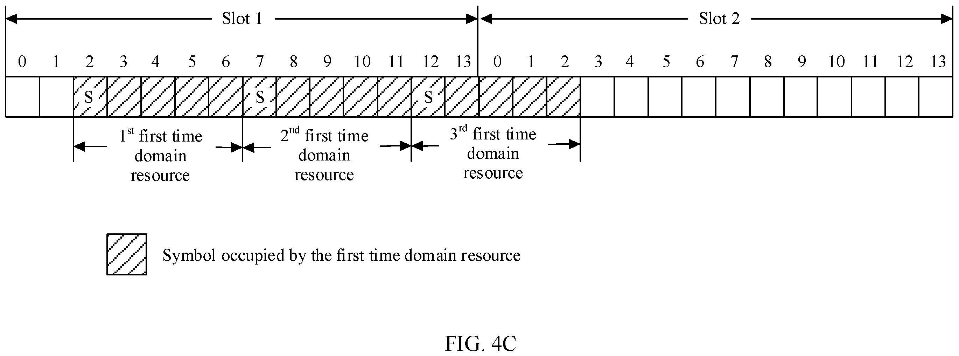

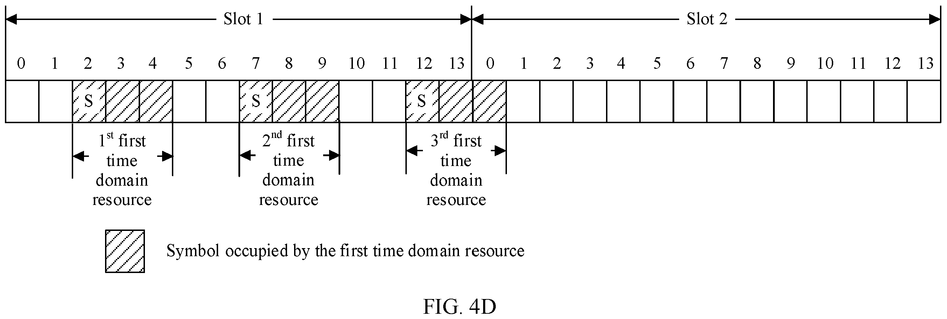

For details, refer to FIG. 4C and FIG. 4D.

FIG. 4C is a schematic diagram of an example of first time domain resources to which another data transmission method is applicable according to an embodiment of this application. Referring to FIG. 4C, for example, the terminal device determines that a start symbol of the 1^{st} first time domain resource is a symbol 2, a length is 5, R=3, and every two adjacent first time domain resources in the three first time domain resources are consecutive, in other words, a time domain interval between every two adjacent first time domain resources is 0. In other words, the last symbol of a former first time domain resource is connected to a start symbol of a latter first time domain resource.

FIG. 4D is a schematic diagram of an example of first time domain resources to which another data transmission method is applicable according to an embodiment of this application. Referring to FIG. 4D, for example, the terminal device determines that a start symbol of the 1^{st} first time domain resource is a symbol 2, a length is 5, R=3, and every two adjacent first time domain resources in the three first time domain resources are spaced by two symbols.

It should be noted that, in the embodiments of this application, a location relationship between every two adjacent first time domain resources in the R first time domain resources is not limited to an equal-interval relationship. For example, the location relationship between every two adjacent first time domain resources in the R first time domain resources may alternatively be that shown in FIG. 4A, FIG. 4B, or the like.

In the embodiments, the terminal device determines one piece of first time domain resource information in the at least one piece of first time domain resource information, where the first time domain resource information includes R; and further determines the R first time domain resources based on R and the 1^{st} first time domain resource. In this way, the terminal device determines the R first time domain resources. The first time domain resource information includes both R and indication information of the 1^{st} first time domain resource. In other words, R and the indication information of the 1^{st} first time domain resource can be indicated together by using only one piece of indication information. Therefore, compared with separately indicating R and the indication information of the 1^{st} first time domain resource, this solution can reduce signaling overheads. Further, because the signaling overheads are reduced, signaling transmission reliability is improved.

In a feasible implementation, when determining the R first time domain resources, the terminal device specifically determines one piece of second time domain resource information in at least one piece of second time domain resource information, where each of the at least one piece of second time domain resource information includes R pieces of first indication information, and each piece of first indication information is used to indicate a start symbol and a length of one of the R first time domain resources.

Specifically, the at least one piece of second time domain resource information may be specified in a protocol or configured by the network device for the terminal device by using higher layer signaling. The terminal device determines one piece of second time domain resource information in the at least one piece of second time domain resource information in a scheduling manner or a scheduling-free manner. Then, the terminal device determines the R pieces of first indication information based on the determined second time domain resource information. Finally, the terminal device determines a start symbol and a length of each of the R first time domain resources based on the R pieces of first indication information, to determine the R first time domain resources.

During specific implementation, the at least one piece of second time domain resource information may be included in a time domain resource table. The time domain resource table may be one of at least one time domain resource table specified in a protocol or configured by using higher layer signaling. The specific time domain resource table in the at least one time domain resource table is determined according to a predefined rule. Each row in the time domain resource table corresponds to one piece of second time domain resource information, and parameters included in the second time domain resource information include at least the R pieces of first indication information. The terminal device determines, in the scheduling manner or the scheduling-free manner, one piece of second time domain resource information in the at least one piece of second time domain resource information included in the time domain resource table, and determines the R first time domain resources based on the R pieces of first indication information included in the second time domain resource information.

In this process, for how the terminal device determines one piece of second time domain resource information in the at least one piece of second time domain resource information in the scheduling manner or the scheduling-free manner, refer to the description of determining, by the terminal device, one piece of first time domain resource information in the at least one piece of first time domain resource information in the scheduling manner or the scheduling-free manner. Details are not described herein again.

In addition, optionally, in the embodiments, a sequence of the R pieces of first indication information represents a sequence of the R first time domain resources. To be specific, the 1^{st} piece of first indication information indicates the 1^{st} first time domain resource, and the 2^{nd} piece of first indication information indicates the 2^{nd} first time domain resource, and so on. The R pieces of first indication information may be R SLIVs, or may be R groups of the start symbol S and the length L. Each piece of first indication information indicates one first time domain resource.

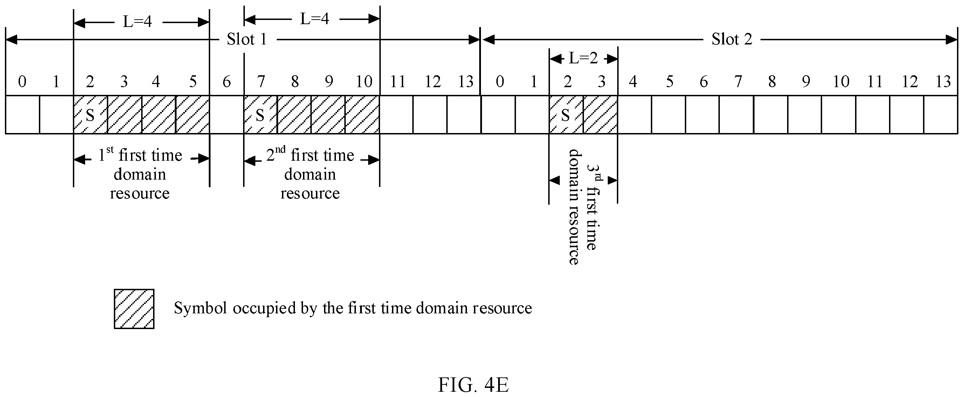

Further, optionally, the start symbol S of the first time domain resource indicated by each piece of first indication information may be different, and the length L indicated by each piece of first indication information may also be different. In two adjacent pieces of first indication information, when a start symbol indicated by a latter piece of first indication information is located before a start symbol indicated by a former piece of first indication information, the start symbol indicated by the latter piece of first indication information is in a next slot by default. For details, refer to FIG. 4E.

FIG. 4E is a schematic diagram of an example of first time domain resources to which another data transmission method is applicable according to an embodiment of this application. Referring to FIG. 4E, it is assumed that the second time domain resource information includes three pieces of first indication information, namely, three groups (S, L) of the start symbol S and the length L: (2, 4), (7, 4), and (2, 2). Because a start symbol of the 3^{rd} first time domain resource is located before a start symbol of the 2^{nd} first time domain resource, and the 2^{nd} first time domain resource is located in a slot 1, the 3^{rd} first time domain resource is located in a slot 2 by default. In FIG. 4E, L of the 1^{st} first time domain resource is 4, and it indicates that the first time domain resource occupies four symbols. Similarly, L of the 2^{nd} first time domain resource is 4, and it indicates that the first time domain resource occupies four symbols; and L of the 3^{rd} first time domain resource is 2, and it indicates that the first time domain resource occupies two symbols.

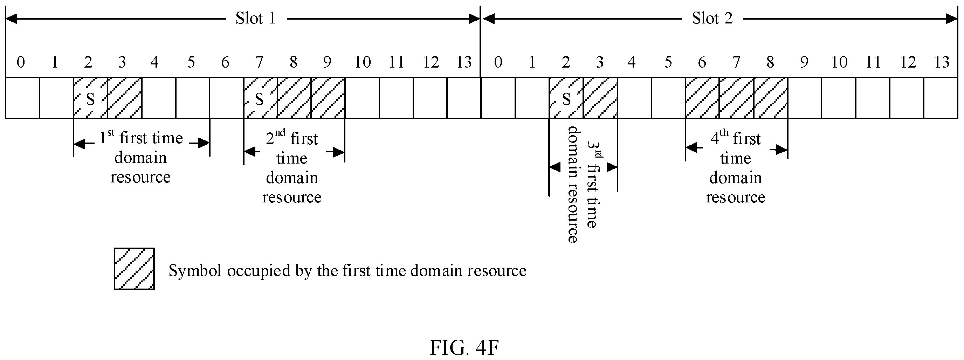

Further, optionally, when lengths L of the first time domain resources indicated by the R pieces of first indication information are not completely the same, a demodulation reference signal (demodulation reference signal, DMRS) is shared for R times of data transmission on the R first time domain resources. In addition, the shared DMRS is located at the first symbol of a first time domain resource with a longer length. For details, refer to FIG. 4F.

FIG. 4F is a schematic diagram of an example of first time domain resources to which another data transmission method is applicable according to an embodiment of this application. Referring to FIG. 4F, it is assumed that the second time domain resource information determined by the terminal device includes four SLIVs, start symbols S indicated by the four SLIVs are sequentially 2, 7, 2, and 6, and lengths L indicated by the four SLIVs are sequentially 2, 3, 2, and 3. When a DMRS is shared on a plurality of first time domain resources, the DMRS is located at a start symbol of the 2^{nd} first time domain resource and a start symbol of the 4^{th} first time domain resource, namely, a symbol 7 in a slot 1 and a symbol in a slot 2.

In this embodiment, the terminal device determines one piece of second time domain resource information in the at least one piece of second time domain resource information, and determines the R first time domain resources based on the R pieces of first indication information included in the second time domain resource information. In this way, the terminal device determines the R first time domain resources. In addition, the second time domain resource information includes indication information of the R first time domain resources. In other words, the R first time domain resources can be indicated together by using only one piece of indication information. Therefore, compared with separately indicating the indication information of the R first time domain resources, this solution can reduce signaling overheads. Further, because the signaling overheads are reduced, signaling transmission reliability is improved.

In a feasible implementation, before determining the R first time domain resources, the terminal device further determines one piece of third time domain resource information in at least one piece of third time domain resource information, where each piece of third time domain resource information includes one piece of first indication information, and the first indication information is used to indicate a start symbol and a length of the 1^{st} first time domain resource in the R first time domain resources; and the terminal device determines R based on the start symbol and/or the length of the 1^{st} first time domain resource that are/is indicated by the first indication information.

Specifically, the at least one piece of third time domain resource information may be specified in a protocol or configured by the network device for the terminal device by using higher layer signaling. The terminal device determines one piece of third time domain resource information in the at least one piece of third time domain resource information in a scheduling manner or a scheduling-free manner. Then, the terminal device determines the first indication information based on the determined third time domain resource information. Finally, the terminal device determines the start symbol and the length of the 1^{st} first time domain resource based on the first indication information, determines R based on the start symbol S and/or the length L that are/is indicated by the first indication information, and then, determines the R first time domain resources based on R and the 1^{st} first time domain resource.

During specific implementation, the at least one piece of third time domain resource information may be included in one time domain resource table. The time domain resource table may be one of at least one time domain resource table specified in a protocol or configured by using higher layer signaling. The specific time domain resource table in the at least one time domain resource table is determined according to a predefined rule. Each row in the time domain resource table corresponds to one piece of third time domain resource information, and a parameter included in the third time domain resource information includes at least one piece of first indication information. The terminal device determines, in a scheduling manner or a scheduling-free manner, one piece of third time domain resource information in the at least one piece of third time domain resource information included in the time domain resource table, determines R and the start symbol and the length of the 1^{st} first time domain resource based on one piece of first indication information included in the third time domain resource information, and further determines the R first time domain resources based on R and the start symbol and the length of the 1^{st} first time domain resource.

In this process, for how the terminal device determines one piece of third time domain resource information in the at least one piece of third time domain resource information in the scheduling manner or the scheduling-free manner, refer to the description of determining, by the terminal device, one piece of first time domain resource information in the at least one piece of first time domain resource information in the scheduling manner or the scheduling-free manner. Details are not described herein again.

The following describes in detail how the terminal device determines R based on the first information.

Specifically, the terminal device determines R in the following manners.

Manner 1: The terminal device determines R based on the start symbol, of the 1^{st} first time domain resource, that is indicated by the first information.

For example, if the first indication information indicates that the start symbol is a symbol 0, R is 2 by default.

For another example, if the start symbol indicated by the first indication information is in the first seven symbols, R is 2 by default; or if the start symbol is in the last seven symbols, R is 1 by default.

Manner 2: The terminal device determines R based on the length, of the 1^{st} first time domain resource, that is indicated by the first indication information.

For example, if the length indicated by the first indication information is 7, R is 2 by default.

For another example, if the length indicated by the first indication information is 2, R is 7 by default. In this case, seven first time domain resources occupy one slot.

Manner 3: The terminal device determines R based on the start symbol and the length of the 1^{st} first time domain resource that are indicated by the first indication information.

For example, R is a quotient of (14-S)/L. When the quotient is not an integer, a rounding operation is to be performed, including rounding down, rounding up, and rounding off.

If the start symbol indicated by the first indication information is the third symbol and the length is 4, R is a quotient of (14-3)/4, that is, R=2. In this case, the 1^{st} first time domain resource occupies a symbol 3, a symbol 4, a symbol 5, and a symbol 6, and the second first time domain resource occupies a symbol 7, a symbol 8, a symbol 9, and a symbol 10.

For another example, if the start symbol indicated by the first information is the first symbol and the length is 7, R is 2.

After determining R and the 1^{st} first time domain resource, the terminal device determines the R first time domain resources based on R and the 1^{st} first time domain resource. In a feasible implementation, the R first time domain resources are consecutive in time domain. To be specific, the 2^{nd} first time domain resource immediately follows an end symbol of the 1^{st} first time domain resource. In other words, a symbol next to the end symbol of the 1^{st} first time domain resource is a start symbol of the 2^{nd} first time domain resource. The 3^{rd} first time domain resource immediately follows an end symbol of the 2^{nd} time domain resource. The rest can be deduced by analogy, so that the R first time domain resources are determined. Alternatively, every two adjacent first time domain resources in the R first time domain resources are spaced by N symbols in time domain, where N is a positive integer.

N is configured by using higher layer signaling or is predefined. To be specific, the 2^{nd} time domain resource is determined at an interval of N symbols from the 1^{st} time domain resource. The rest can be deduced by analogy, so that the R first time domain resources are determined.

Optionally, whether the R first time domain resources are consecutive or are spaced by N symbols is configured by using higher layer signaling, or is predefined.

For details, refer to FIG. 4E and FIG. 4F. Details are not described again.

In this embodiment, the terminal device determines one piece of third time domain resource information in the at least one piece of third time domain resource information, and determines the R first time domain resources based on one piece of first indication information included in the third time domain resource information. In this way, the terminal device determines the R first time domain resources. The first time domain resource information includes only indication information of the 1^{st} first time domain resource. R may be implicitly determined based on the first time domain resource information and according to some predefined rules, to determine the R first time domain resources. Compared with directly indicating indication information of the R first time domain resources, this solution can reduce signaling overheads. Further, because the signaling overheads are reduced, signaling transmission reliability is improved.

In a feasible implementation, that the terminal device determines R first time domain resources includes: The terminal device receives a parameter sent by the network device; and the terminal device determines the R first time domain resources based on the parameter and first information.

In this implementation, the network device sends one parameter to the terminal device. Correspondingly, the terminal device receives the parameter. After receiving the parameter, the terminal device determines the R first time domain resources based on the parameter and the first information. The first information is any information required for data transmission between the terminal device and the network device. In a process of determining the R first time domain resources, the terminal device determines a start symbol and a length of the 1^{st} first time domain resource in a scheduling or scheduling-free manner; determines R based on the first information; and further determines the R first time domain resources based on R and the 1^{st} first time domain resource. R is determined based on the first information in an implicit manner. For example, if the first information is a DCI format, when the DCI format is a format 0 or a format 1, the parameter is equal to R by default; otherwise, R is equal to 1 or another value.

In this embodiment, the terminal device determines R in the implicit manner, and further determines the R first time domain resources based on R and the 1^{st} first time domain resource. In this way, the terminal device determines the R first time domain resources.

In the foregoing embodiment, when determining the R first time domain resources, the terminal device first determines R. The following describes in detail how the terminal device determines R in the foregoing embodiment.

In a feasible implementation, before determining the R first time domain resources based on the parameter and the first information, the terminal device further determines, based on the first information, that the parameter indicates R, where R is equal to the parameter; or determines, based on the first information, that R is equal to 1. That R is equal to 1 may be understood as that mini-slot-level repetition is not performed, or a mini-slot-level repetition count is 1, in other words, transmission is performed only once in one slot.

Specifically, whether R is equal to the parameter depends on the first information. When it is determined, based on the first information, that the parameter is used to indicate R, R is equal to the parameter; otherwise, R is equal to 1 or another default value specified in a protocol. When it is determined, based on the first information, that the parameter does not indicate R, the parameter is used to indicate a slot-level repetition count, or the like. When the parameter indicates the slot-level repetition count, assuming that a value of the parameter is K, the repetition count is equal to K. The repetition count K indicates the terminal device to repeatedly send K groups of uplink data channels or repeatedly receive K groups of downlink data channels, where K is a positive integer, each group of uplink data channels includes the uplink data channel sent on the R first time domain resources, and each group of downlink data channels includes the downlink data channel received on the R first time domain resources.

In this embodiment, the terminal device determines R based on the first information, and further determines the R first time domain resources based on R and the 1^{st} first time domain resource. In this way, the terminal device determines the R first time domain resources.

The following describes the first information in the foregoing embodiment.

In a feasible implementation, the first information includes at least one of the following information: a downlink control information DCI format, a scrambling manner of a radio network temporary identity (radio network temporary identity, RNTI) of DCI, a start symbol of the 1^{st} time domain resource in the R first time domain resources, a length of the 1^{st} time domain resource in the R first time domain resources, a mapping type of the 1^{st} time domain resource in the R first time domain resources, and indication information carried in higher layer signaling or DCI.

Optionally, the terminal device determines the first information by receiving related information of the first information. For example, the related information of the first information may be DCI. After receiving the DCI, the terminal device may determine a DCI format, a scrambling manner of a radio network temporary identity (radio network temporary identity, RNTI) of the DCI, a start symbol of the 1^{st} time domain resource in the R first time domain resources, a length of the 1^{st} time domain resource in the R first time domain resources, a mapping type of the 1^{st} time domain resource in the R first time domain resources, and the like.

The following describes in detail how the terminal device determines R based on the specific first information.

For example, the first information is specifically the mapping type.

It is preset that when the mapping type is a type A, R is equal to 1 or another default value, and the parameter indicates the repetition count K; and when the mapping type is a type B, R is equal to the parameter. When the terminal device and the network device exchange data, the terminal device determines the mapping type and the start symbol and the length of the 1^{st} first time domain resource in a scheduling manner or a scheduling-free manner; then, determines R based on the mapping type; and finally, determines the R first time domain resources based on R and the start symbol and the length of the 1^{st} first time domain resource.

For another example, the first information is specifically the length of the 1^{st} time domain resource in the R first time domain resources.

A relationship between the length, the parameter, and R is preset, and whether R is equal to the parameter is determined based on the relationship.
Example 1: It is preset that when the length is less than or equal to 7, R is equal to the parameter; and if the length is greater than 7, R is equal to 1 or another default value, and the parameter indicates the repetition count K. For example, when the value of the parameter is 3, if the length is 4, R=3; and if the length is 9, R=1 and the repetition count K=3.
Example 2: It is preset that when the length is less than 7, R is equal to the parameter; and if the length is greater than or equal to 7, R is equal to 1 or another default value, and the parameter indicates the repetition count K.
Example 3: It is preset that when the length is less than 7, R is equal to the parameter; if the length is greater than 7, R is equal to 1 or another default value, and the parameter indicates the repetition count K; and if the length is 7, R is equal to the parameter, and the repetition count K is also equal to the parameter.

For still another example, the first information is specifically the DCI format.

It is preset that when the DCI format is a compact (compact) DCI format, R is equal to the parameter; and when the DCI format is another format, R is equal to 1 or another default value, and the parameter indicates the repetition count K. When the terminal device and the network device exchange data, the terminal device receives, in a scheduling manner, DCI sent by the network device, determines the start symbol and the length of the 1^{st} first time domain resource based on the DCI, and determines R based on the DCI format; and then, determines the R first time domain resources based on R and the start symbol and the length of the 1^{st} first time domain resource. The compact DCI format is a DCI format for scheduling a high-reliability and low-latency service, a DCI format with a relatively small quantity of bits (which is less than 40 bits after a cyclic redundancy check (cyclic redundancy check, CRC) bit is excluded), or a DCI format with relatively high reliability.

For still another example, the first information is specifically the scrambling manner of the radio network temporary identity (radio network temporary identity, RNTI) of the DCI.

It is preset that when the RNTI of the DCI is a new RNTI (which may also be referred to as a new-RNTI or another RNTI), R is equal to the parameter; and when the RNTI of the DCI is scrambled in another manner, R is equal to 1 or another default value specified in a protocol, and the parameter indicates the repetition count K. When the terminal device and the network device exchange data, the terminal device receives, in a scheduling manner, the DCI sent by the network device, determines the start symbol and the length of the 1^{st} first time domain resource based on the DCI, and determines R based on the scrambling manner of the RNTI of the DCI; and then, determines the R first time domain resources based on R and the start symbol and the length of the 1^{st} first time domain resource. The new RNTI is a scrambling identifier of DCI for scheduling a high-reliability and low-latency service, or indicates that a modulation and coding scheme (modulation and coding scheme, MCS) of data scheduled by the DCI corresponds to an MCS table with relatively high reliability.

For still another example, the first information is specifically the indication information carried in the higher layer signaling or the DCI.

2-bit indication information is preset. When the indication information is 00, it indicates that R is equal to the parameter; when the indication information is 01, it indicates that R is equal to 1 or another default value, and the parameter indicates the repetition count K; when the indication information is 10, it indicates that R is equal to the parameter, and the repetition count K is also equal to the parameter; and when the indication information is 11, it indicates that neither R nor the repetition count K is equal to the parameter. The indication information may be carried in the DCI, or may be carried in the higher layer signaling. When the terminal device and the network device exchange data in a scheduling manner, the terminal device receives the DCI sent by the network device, where the DCI carries one piece of indication information. The terminal device determines the start symbol and the length of the 1^{st} first time domain resource based on the DCI, and determines R based on the indication information carried in the DCI; and then, determines the R first time domain resources based on R and the start symbol and the length of the 1^{st} first time domain resource. Alternatively, when the terminal device and the network device exchange data in a scheduling-free manner, the terminal device receives the higher layer signaling sent by the network device, determines R based on the indication information carried in the higher layer signaling, autonomously determines the start symbol and the length of the 1^{st} first time domain resource, and then, determines the R first time domain resources based on R and the start symbol and the length of the 1^{st} first time domain resource.

For still another example, the first information is specifically the start symbol and/or the length of the 1^{st} first time domain resource in the R first time domain resources.

It is preset that when the start symbol of the 1^{st} first time domain resource is a symbol 0 and the length is 7, R is equal to the parameter, and the repetition count K is also equal to the parameter; otherwise, R is equal to 1 or another default value. When the terminal device and the network device exchange data, the terminal device determines the start symbol and the length of the 1^{st} first time domain resource in a scheduling manner or a scheduling-free manner; then, determines R based on the length; and finally, determines the R first time domain resources based on R and the start symbol and the length of the 1^{st} first time domain resource.

Alternatively, it is preset that when the length is less than or equal to 7, R is equal to the parameter; and if the length is greater than 7, R is equal to 1 or another default value, and the parameter indicates the repetition count K; or when the length is less than 7, R is equal to the parameter; and when the length is greater than or equal to 7, R is equal to 1 or another default value, and the parameter indicates the repetition count K; or when the length is less than 7, R is equal to the parameter; when the length is greater than 7, R is equal to 1 or another default value, and the parameter indicates the repetition count K; and if the length is equal to 7, R is equal to the parameter and the repetition count K is also equal to the parameter.

It should be noted that the foregoing presetting may be flexibly set according to a requirement. This is not limited in this embodiment of this application.

After determining R and the 1^{st} first time domain resource, the terminal device determines the R first time domain resources based on R and the 1^{st} first time domain resource. In a feasible implementation, the R first time domain resources are consecutive in time domain. To be specific, the 2^{nd} first time domain resource immediately follows an end symbol of the 1^{st} first time domain resource. In other words, a symbol next to the end symbol of the 1^{st} first time domain resource is a start symbol of the 2^{nd} first time domain resource. The 3^{rd} first time domain resource immediately follows an end symbol of the 2^{nd} time domain resource. The rest can be deduced by analogy, so that the R first time domain resources are determined. Alternatively, every two adjacent first time domain resources in the R first time domain resources are spaced by N symbols in time domain, where N is a positive integer.

N is configured by using higher layer signaling or is predefined. To be specific, the 2^{nd} time domain resource is determined at an interval of N symbols from the 1^{st} time domain resource. The rest can be deduced by analogy, so that the R first time domain resources are determined.

Optionally, whether the R first time domain resources are consecutive or are spaced by N symbols is configured by using higher layer signaling, or is predefined.

For details, refer to FIG. 4E and FIG. 4F. Details are not described again.

In this embodiment, the first information is flexibly configured, so that the terminal device determines R based on the first information, and further determines the R first time domain resources based on R and the 1^{st} first time domain resource. In this way, the R first time domain resources are determined. The information related to the first information is necessary for normal communication between the network device and the terminal device. R is implicitly determined based on the first information, to determine the R first time domain resources. Therefore, compared with directly indicating indication information of the R first time domain resources, this solution can reduce signaling overheads. Further, because the signaling overheads are reduced, signaling transmission reliability is improved.

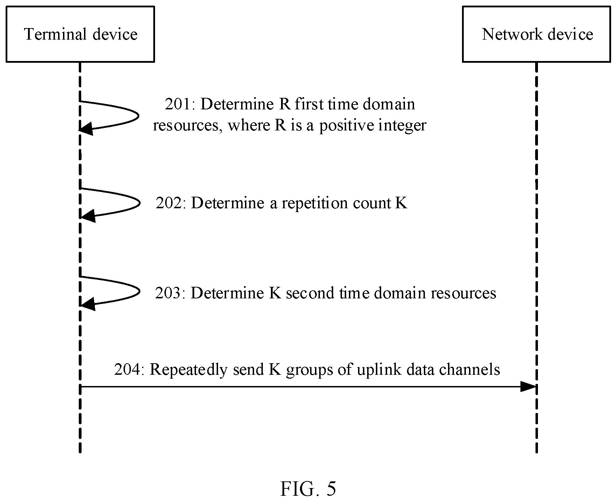

In the foregoing embodiments, the terminal device determines the R first time domain resources, and implements mini-slot-level repetition on the R first time domain resources. Further, the terminal device may further implement slot-level repetition based on mini-slot-level repetition. For details, refer to FIG. 5.

FIG. 5 is a flowchart of another data transmission method according to an embodiment of this application. This embodiment includes the following steps.

201: A terminal device determines R first time domain resources.

For example, the terminal device may determine the R first time domain resources based on the method according to any of the foregoing embodiments. Alternatively, the terminal device receives DCI sent by a network device, where the DCI carries R. The terminal device determines the 1^{st} first time domain resource in the R first time domain resources based on the DCI, and determines the R first time domain resources based on R and the 1^{st} first time domain resource.

For a method for determining the R first time domain resources based on R and the 1^{st} first data resource, refer to the method in the foregoing embodiments.

202: The terminal device determines a repetition count K.

The repetition count K may be determined by the terminal device when the terminal device determines R based on a parameter and first information. Alternatively, the repetition count K may be configured by the network device for the terminal device by using higher layer signaling. The repetition count K indicates the terminal device to repeatedly send K groups of uplink data channels or repeatedly receive K groups of downlink data channels, and K is a positive integer.

203: The terminal device determines K second time domain resources.

For example, the terminal device determines the K second time domain resources based on the repetition count K and the R first time domain resources, where each second time domain resource includes the R first time domain resources.

204: The terminal device repeatedly sends the K groups of uplink data channels.

In this step, in an uplink process, the terminal device repeatedly sends the K groups of uplink data channels. In addition, in a downlink process, the terminal device repeatedly receives the K groups of downlink data channels.

The following describes the repetition count K in detail.

In a feasible implementation, the terminal device determines the repetition count K, where the repetition count K indicates the terminal device to repeatedly send the K groups of uplink data channels or repeatedly receive the K groups of downlink data channels, and K is a positive integer; and the terminal device determines the K second time domain resources based on the repetition count K and the R first time domain resources, where each second time domain resource includes the R first time domain resources.

Specifically, the repetition count K may be configured by the network device by using the higher layer signaling, or may be preconfigured. Alternatively, the terminal device may determine the repetition count K in the foregoing implicit indication manner. After determining the repetition count K, the terminal device determines the K second time domain resources based on the repetition count K and the R first time domain resources, and sends one group of uplink data channels or receives one group of downlink data channels on each second time domain resource, where K is a positive integer, each group of uplink data channels includes the uplink data channel sent by the terminal device on the R first time domain resources, and each group of downlink data channels includes the downlink data channel received by the terminal device on the R first time domain resources.

It should be noted that a sequence of the determining, by the terminal device, the K second time domain resources and the determining, by the terminal device, the R first time domain resources is not strictly limited. For example, the R first time domain resources may be first determined, and then, the repetition count K and how to obtain the K second time domain resources based on the repetition count K and the R first time domain resources are determined. For another example, the repetition count K and how to obtain the K second time domain resources based on the repetition count K and the R first time domain resources may be first determined, and then, the R first time domain resources are determined.

In this embodiment, the terminal device repeatedly sends the K groups of uplink data channels or repeatedly receives the K groups of downlink data channels based on the repetition count K, to implement slot-level repetition based on mini-slot-level repetition. This further improves data transmission reliability.

The following describes in detail how the terminal device determines the K second time domain resources based on the repetition count K and the R first time domain resources in the foregoing embodiment.

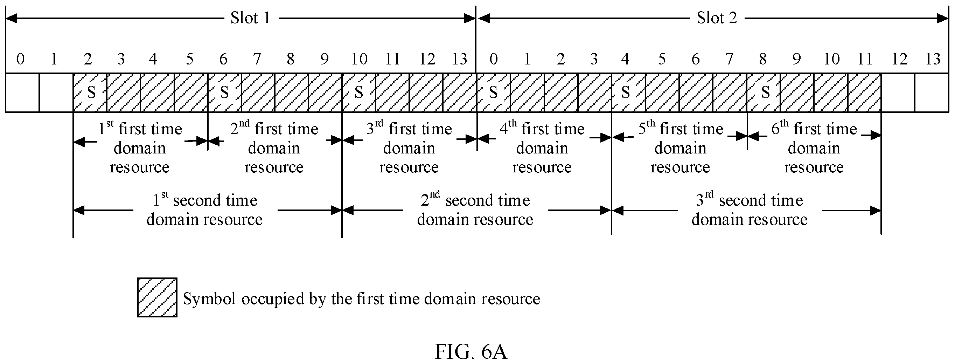

In a feasible implementation, that the terminal device determines the K second time domain resources based on the repetition count K and the R first time domain resources includes: The terminal device repeats the R first time domain resources for K times in time domain, to obtain the K second time domain resources, where every two adjacent second time domain resources are consecutive in time domain; every two adjacent second time domain resources are spaced by N symbols in time domain, where N is a positive integer; or a time-domain location relationship between every two adjacent second time domain resources is preset or may not be an equal-interval relationship. For details, refer to FIG. 6A to FIG. 6C.

In addition, it should be particularly noted that examples shown in FIG. 6A to FIG. 6D are merely for better understanding of the technical solutions in this embodiment of this application. In this embodiment of this application, a time domain interval, a length, and a start symbol of the R first time domain resources, and a length, a time domain interval, and a start symbol of the K second time domain resources include but are not limited to the examples in FIG. 6A to FIG. 6D.

FIG. 6A is a schematic diagram of an example of second time domain resources to which another data transmission method is applicable according to an embodiment of this application. Referring to FIG. 6A, R=2, a start symbol of the 1^{st} first time domain resource is a symbol 2, and a length of the 1^{st} first time domain resource is 4. In this case, the two first time domain resources occupy the symbol 2 to a symbol 9. When the repetition count K=3, the symbol 2 to the symbol 9 are repeated for three times in time domain, to obtain three second time domain resources.

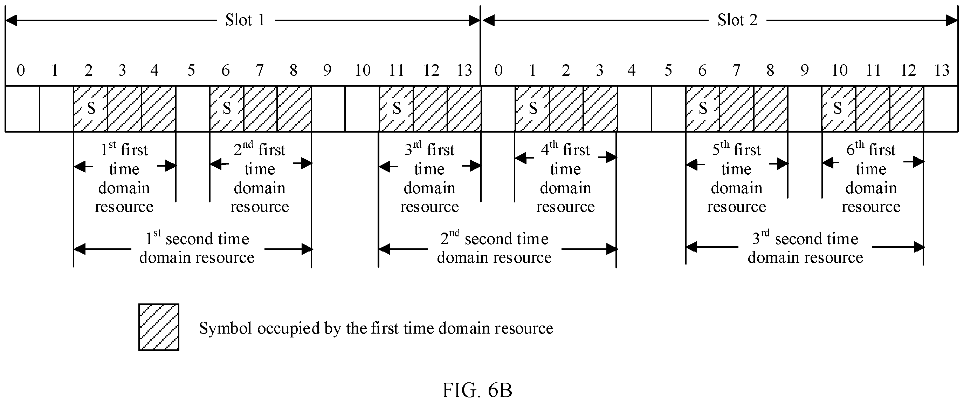

FIG. 6B is a schematic diagram of an example of second time domain resources to which another data transmission method is applicable according to an embodiment of this application. Referring to FIG. 6B, R=2, and the 1^{st} first time domain resource and the 2^{nd} first time domain resource are spaced by four symbols. The repetition count K=3, and every two adjacent second time domain resources are spaced by nine symbols.

In addition, when all symbols included in the R first time domain resources belong to a same slot, the terminal device repeats the R first time domain resources in K slots in time domain, to obtain the K second time domain resources, where a start symbol of the 1^{st} first time domain resource included in each slot has a same number. Specifically, referring to FIG. 4A, R=2, and the 1^{st} first time domain resource and the 2^{nd} first time domain resource are consecutive. The repetition count K=2, and a start symbol of the 1^{st} second time domain resource and a start symbol of the 2^{nd} second time domain resource have a same number.

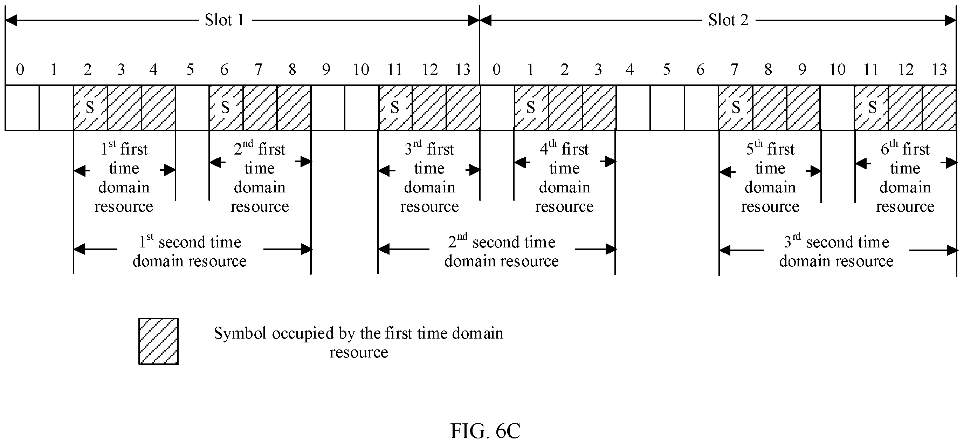

FIG. 6C is a schematic diagram of an example of second time domain resources to which another data transmission method is applicable according to an embodiment of this application. Referring to FIG. 6C, R=2, and the 1^{st} first time domain resource and the 2^{nd} first time domain resource are spaced by four symbols. The repetition count K=3, the 1^{st} second time domain resource and the 2^{nd} second time domain resource are spaced by nine symbols, and the 2^{nd} second time domain resource and the 3^{rd} second time domain resource are spaced by 10 symbols.

In this embodiment, the terminal device determines the K second time domain resources based on the repetition count K and the R first time domain resources, to send one group of uplink data channels or one group of downlink data channels on each of the K second time domain resources, so as to implement slot-level repetition based on mini-slot-level repetition. This further improves data transmission reliability, and can ensure compatibility between a new communications system and an existing system.

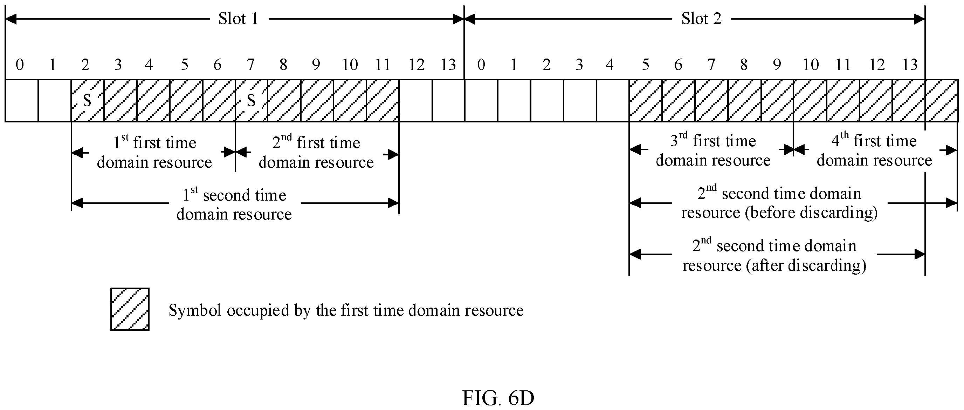

In another feasible implementation, that the terminal device determines the K second time domain resources based on the repetition count K and the R first time domain resources includes: The terminal device repeats the R first time domain resources for K times in time domain, where a K^{th} second time domain resource obtained through a K^{th} repetition belongs to two different slots; and the terminal device discards a time domain resource in the latter slot in the two different slots, and uses K-1 second time domain resources obtained through the 1^{st} to (K-1)^{th} repetitions and a remaining part of the K^{th} time domain resource as the K second time domain resources. In other words, after the R first time domain resources are repeated for K times, it is ensured that the K groups of repeated resources do not exceed K slots. Once more than K slots are occupied, data transmission on a first time domain resource that exceeds the K slots is canceled. For details, refer to FIG. 6D.

FIG. 6D is a schematic diagram of an example of second time domain resources to which another data transmission method is applicable according to an embodiment of this application. Referring to FIG. 6D, R=2, and the 1^{st} first time domain resource and the 2^{nd} first time domain resource are consecutive. The repetition count K=2, and the 1^{st} second time domain resource and the 2^{nd} second time domain resource are spaced by 17 symbols. In this case, the last symbol of the 4^{th} first time domain resource, that is, the last symbol of the 2^{nd} second time domain resource, is located in a slot 3. In this case, the last symbol is discarded, and the 1^{st} second time domain resource and a time domain resource obtained after the last symbol of the 2^{nd} time domain resource is discarded are used as the K second time domain resources.

In this embodiment, the terminal device determines the K second time domain resources based on the repetition count K and the R first time domain resources, to send one group of uplink data channels or one group of downlink data channels on each of the K second time domain resources, so as to implement slot-level repetition based on mini-slot-level repetition. This further improves data transmission reliability, and can ensure compatibility between a new communications system and an existing system.

In the foregoing embodiment, in an implementation, the network device may further send a slot format indicator (slot format indicator, SFI) to the terminal device through DCI and the like. The SFI is used to indicate uplink symbols, downlink symbols, and flexible symbols (which may be used to transmit an uplink data channel or a downlink data channel during dynamic scheduling) in one slot. When the SFI indicates that a symbol is an uplink symbol, if the R first time domain resources that are determined by the terminal device and that are used to receive R PDSCHs include the symbol, a collision occurs because uplink and downlink directions are inconsistent. Similarly, when the SFI indicates that a symbol is a downlink symbol, if the R first time domain resources that are determined by the terminal device and that are used to send R PUSCHs include the symbol, a collision occurs because uplink and downlink directions are inconsistent. The following describes in detail how the terminal device avoids the collision.

In a feasible implementation, that the terminal device repeatedly sends the uplink data channel for R times or repeatedly receives the downlink data channel for R times on the R first time domain resources includes:

When at least one symbol included in an X^{th} first time domain resource collides with the symbol indicated by the slot format indicator SFI, the terminal device stops sending the uplink data channel or receiving the downlink data channel on the X^{th} first time domain resource; the terminal device postpones the X^{th} first time domain resource and a first time domain resource after the X^{th} first time domain resource; or the terminal device stops sending the uplink data channel or receiving the downlink data channel on a collision symbol included in the X^{th} first time domain resource, where the X^{th} first time domain resource is any one of the R first time domain resources.

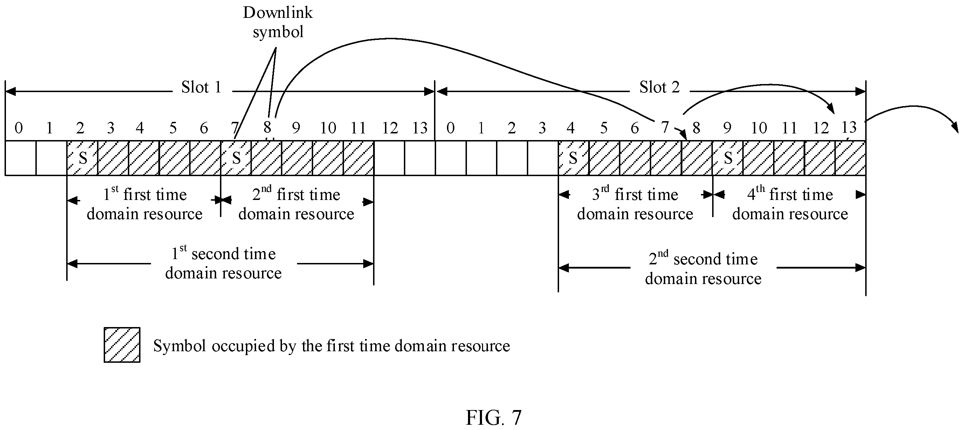

The following describes in detail how the terminal device avoids a collision by using an example in which the terminal device sends the uplink data channel. Specifically, FIG. 7 is a schematic diagram of an example of collision avoidance to which a data transmission method is applicable according to an embodiment of this application.

According to FIG. 7, R=2, K=2, there are four first time domain resources in total, and the 1^{st} second time domain resource and the 2^{nd} second time domain resource are spaced by 16 symbols. It is assumed that the terminal device sends uplink data for four times on the four first time domain resources. When the SFI indicates that a symbol 7 and a symbol 8 in a slot 1 are used for downlink, the terminal device avoids the collision in any one of the following manners:
Manner 1: The terminal device stops sending the uplink data channel on the 2^{nd} first time domain resource.
Manner 2: The terminal device postpones the 2^{nd} first time domain resource and the first time domain resources after the 2^{nd} first time domain resource.
   Specifically, referring to FIG. 7 again, the terminal device postpones the 2^{nd} first time domain resource to a location of the 3^{rd} first time domain resource, postpones the 3^{rd} first time domain resource to a location of the 4^{th} first time domain resource, and postpones the 4^{th} first time domain resource to a location of the 5^{th} first time domain resource. After being postponed, the last symbol of the 3^{rd} first time domain resource and all symbols of the 4^{th} first time domain resource are located after a slot 2, and therefore are discarded.
Manner 3: The terminal device stops sending the uplink data channel on a collision symbol included in the X^{th} first time domain resource.

Specifically, referring to FIG. 7 again, in this manner, the terminal device stops receiving downlink data on the symbol 7 and the symbol 8 of the 2^{nd} first time domain resource, and continues to send the uplink data channel on a remaining first time domain resource, for example, symbols 9, 10, and 11.

In this embodiment, when the symbol indicated by the SFI collides with at least one symbol in any first time domain resource, some rules are defined to ensure that a transmission direction of the repeatedly sent uplink data channel or the repeatedly received downlink data channel does not collide with a direction of the symbol indicated by the SFI. Therefore, algorithm complexity caused by the network device to ensure that no collision occurs is reduced.

It should be noted that, in the foregoing embodiment, the time domain interval is an interval between start symbols of every two adjacent second time domain resources. However, this is not limited in this embodiment of this application. For example, the time domain interval may alternatively be an interval between end symbols of every two adjacent first time domain resources. For another example, the time domain interval may alternatively be an interval between an end symbol of a former first time domain resource and a start symbol of a latter first time domain resource in every two adjacent first time domain resources. For details, refer to the description of the time domain interval between the first time domain resources. Details are not described again.

The following describes in detail how the network device determines the R first time domain resources to send the downlink data channel or receive the uplink data channel on each of the R first time domain resources in the foregoing embodiment.

The network device first determines the R first time domain resources. The network device may determine the R first time domain resources based on a scheduling algorithm or in another manner. An implementation solution of the network device is not limited in this application.

After determining the R first time domain resources, the network device needs to send indication information to the terminal device to indicate the R first time domain resources. Details are described below.

In a feasible implementation, after or before determining the R first time domain resources, the network device further determines one piece of first time domain resource information in at least one piece of first time domain resource information, where each of the at least one piece of first time domain resource information includes R and one piece of first indication information, and the first indication information is used to indicate a start symbol and a length of the 1^{st} first time domain resource in the R first time domain resources.

Specifically, the at least one piece of first time domain resource information may be specified in a protocol or determined by the network device. For example, the network device may determine the at least one piece of first time domain resource information based on a protocol specification. For another example, the network device may determine the at least one piece of first time domain resource information based on a scheduling algorithm.

After the network device determines the at least one piece of first time domain resource information, the network device determines one piece of first time domain resource information in the at least one piece of first time domain resource information, and indicates the first time domain resource information to the terminal device in a scheduling manner or a scheduling-free manner, where the first time domain resource information is one of the at least one piece of first time domain resource information, the first time domain resource information includes R and one piece of first indication information, and the first indication information is used to indicate the start symbol and the length of the 1^{st} first time domain resource in the R first time domain resources, to indicate the R first time domain resources.

During specific implementation, the at least one piece of first time domain resource information may be included in one time domain resource table. The time domain resource table may be one of at least one time domain resource table specified in a protocol or configured by using higher layer signaling. The specific time domain resource table in the at least one time domain resource table is determined according to a predefined rule. Each row in the time domain resource table corresponds to one piece of first time domain resource information, and parameters included in the first time domain resource information include at least the first indication information and R.

First, the scheduling manner is described.

When the network device performs data transmission with the terminal device in the scheduling manner, the network device sends a PDCCH to the terminal device, where DCI included in the PDCCH is used to indicate, to a user, one piece of first time domain resource information in one time domain resource table.

After receiving the PDCCH, the terminal device determines one piece of first time domain resource information based on the DCI in the PDCCH, determines the R first time domain resources based on the first time domain resource information, and on each of the R first time domain resources, sends the uplink data channel to the network device or receives the downlink data channel sent by the network device. The time domain resource table is one of the at least one time domain resource table specified in the protocol or configured by using the higher layer signaling. The specific time domain resource table in the at least one time domain resource table is determined according to the predefined rule.

For the time domain resource table specified in the protocol and the time domain resource table configured by using the higher layer signaling, refer to the foregoing descriptions. Details are not described again.

Then, the scheduling-free manner is described.

When the network device performs data transmission with the terminal device in the scheduling manner, the network device sends one piece of higher layer signaling to the terminal device, where the higher layer signaling indicates one piece of first time domain resource information in one time domain resource table.

The terminal device determines one piece of first time domain resource information based on the higher layer signaling, determines the R first time domain resources based on the first time domain resource information, and on each of the R first time domain resources, sends the uplink data channel to the network device or receives the downlink data channel sent by the network device. The time domain resource table is one of the at least one time domain resource table specified in the protocol or configured by using the higher layer signaling. The specific time domain resource table in the at least one time domain resource table is determined according to the predefined rule.

Content of the time domain resource table specified in the protocol or configured by using the higher layer signaling and the first time domain resource information is the same as that in the scheduling manner. Details are not described again.

In this embodiment, the R first time domain resources are consecutive in time domain. To be specific, the 2^{nd} first time domain resource immediately follows an end symbol of the 1^{st} first time domain resource. In other words, a symbol next to the end symbol of the 1^{st} first time domain resource is a start symbol of the 2^{nd} first time domain resource. The 3^{rd} first time domain resource immediately follows an end symbol of the 2^{nd} time domain resource. The rest can be deduced by analogy, so that the R first time domain resources are determined. Alternatively, every two adjacent first time domain resources in the R first time domain resources are spaced by N symbols in time domain, where N is a positive integer. N is configured by using higher layer signaling or is predefined. To be specific, the 2^{nd} time domain resource is determined at an interval of N symbols from the 1^{st} time domain resource. The rest can be deduced by analogy, so that the R first time domain resources are determined.

Optionally, whether the R first time domain resources are consecutive or are spaced by N symbols is configured by the network device by sending the higher layer signaling to the user equipment, or is predefined.

In this embodiment, after determining the R first time domain resources, the network device indicates one piece of first time domain resource information to the terminal device in the scheduling or scheduling-free manner, where the first time domain resource information includes R, so that the terminal device determines the R first time domain resources based on R and the 1^{st} first time domain resource. In this way, the terminal device determines the R first time domain resources. The first time domain resource information includes both R and indication information of the 1^{st} first time domain resource. In other words, R and the indication information of the 1^{st} first time domain resource can be indicated together by using only one piece of indication information. Therefore, compared with separately indicating R and the indication information of the 1^{st} first time domain resource, this solution can reduce signaling overheads. Further, because the signaling overheads are reduced, signaling transmission reliability is improved.

In a feasible implementation, after or before the network device determines the R first time domain resources, the network device determines one piece of second time domain resource information in at least one piece of second time domain resource information, where each of the at least one piece of second time domain resource information includes R pieces of first indication information, and the first indication information is used to indicate a start symbol and a length of one of the R first time domain resources.

Specifically, the at least one piece of second time domain resource information may be specified in a protocol or determined by the network device. For example, the network device may determine the at least one piece of second time domain resource information based on a protocol specification. For another example, the network device may determine the at least one piece of second time domain resource information based on a scheduling algorithm

After the network device determines the at least one piece of second time domain resource information, the network device determines one piece of second time domain resource information in the at least one piece of second time domain resource information, and indicates the second time domain resource information to the terminal device in a scheduling manner or a scheduling-free manner, where the second time domain resource information is one of the at least one piece of second time domain resource information, and the second time domain resource information includes the R pieces of first indication information. The R pieces of indication information are used to indicate the R first time domain resources.

During specific implementation, the at least one piece of second time domain resource information may be included in one time domain resource table. The time domain resource table may be one of at least one time domain resource table specified in a protocol or configured by using higher layer signaling. The specific time domain resource table in the at least one time domain resource table is determined according to a predefined rule. In this process, for how the network device indicates the second time domain resource information in the scheduling manner and the scheduling-free manner, refer to the description of indicating, by the network device, one piece of first time domain resource information in the scheduling manner or the scheduling-free manner. Details are not described herein again.

In this embodiment, the network device determines one piece of second time domain resource information in the at least one piece of second time domain resource information, and the second time domain resource information includes indication information of the R first time domain resources. In other words, the network device can indicate the R first time domain resources together by sending only one piece of indication information. Therefore, compared with separately indicating the indication information of the R first time domain resources, this solution can reduce signaling overheads. Further, because the signaling overheads are reduced, signaling transmission reliability is improved.

In a feasible implementation, before or after determining the R first time domain resources, the network device further determines one piece of third time domain resource information in at least one piece of third time domain resource information, where each piece of third time domain resource information includes one piece of first indication information, the first indication information is used to indicate a start symbol and a length of the 1^{st} first time domain resource in the R first time domain resources, and the start symbol and the length are used to indicate R.

Specifically, the at least one piece of third time domain resource information may be specified in a protocol or determined by the network device. For example, the network device may determine the at least one piece of third time domain resource information based on a protocol specification. For another example, the network device may determine the at least one piece of third time domain resource information based on a scheduling algorithm, and send the at least one piece of third time domain resource information to the terminal device through higher layer signaling.

After the network device determines the at least one piece of third time domain resource information, the network device determines one piece of third time domain resource information in the at least one piece of third time domain resource information, and indicates the third time domain resource information to the terminal device in a scheduling manner or a scheduling-free manner, where the third time domain resource information is one of the at least one piece of third time domain resource information, the third time domain resource information includes the first indication information, and the first indication information is used to indicate the start symbol and the length of the 1^{st} first time domain resource in the R first time domain resources.

In this embodiment, the R first time domain resources are consecutive in time domain. To be specific, the 2^{nd} first time domain resource immediately follows an end symbol of the 1^{st} first time domain resource. In other words, a symbol next to the end symbol of the 1^{st} first time domain resource is a start symbol of the 2^{nd} first time domain resource. The 3^{rd} first time domain resource immediately follows an end symbol of the 2^{nd} time domain resource. The rest can be deduced by analogy, so that the R first time domain resources are determined. Alternatively, every two adjacent first time domain resources in the R first time domain resources are spaced by N symbols in time domain, where N is a positive integer. N is configured by using higher layer signaling or is predefined. To be specific, the 2^{nd} time domain resource is determined at an interval of N symbols from the 1^{st} time domain resource. The rest can be deduced by analogy, so that the R first time domain resources are determined.

Optionally, whether the R first time domain resources are consecutive or are spaced by N symbols is configured by the network device by sending the higher layer signaling to the user equipment, or is predefined.

In this embodiment, the network device determines one piece of third time domain resource information in the at least one piece of third time domain resource information, where
the third time domain resource information indicates indication information of the 1^{st} first time domain resource in the R first time domain resources, and the indication information of the first time domain resource may be used to implicitly determine R. In other words, the network device can indicate the R first time domain resources together by sending only one piece of indication information indicating the 1^{st} first time-frequency resource. Therefore, compared with separately indicating indication information of the R first time domain resources, this solution can reduce signaling overheads. Further, because the signaling overheads are reduced, signaling transmission reliability is improved.

In a feasible implementation, that the network device determines the R first time domain resources includes:

The network device sends a parameter to the terminal device, where whether the parameter is used to indicate R depends on first information; and if the parameter indicates R, R is equal to the parameter; otherwise, R is equal to 1.

In this implementation, the network device sends one parameter to the terminal device. Correspondingly, the terminal device receives the parameter. For example, if the first information is a DCI format, when the DCI format is a format 0 or a format 1, the parameter is equal to R by default; otherwise, R is equal to 1 or another value.

In this embodiment, the R first time domain resources are consecutive in time domain. To be specific, the 2^{nd} first time domain resource immediately follows an end symbol of the 1^{st} first time domain resource. In other words, a symbol next to the end symbol of the 1^{st} first time domain resource is a start symbol of the 2^{nd} first time domain resource. The 3^{rd} first time domain resource immediately follows an end symbol of the 2^{nd} time domain resource. The rest can be deduced by analogy, so that the R first time domain resources are determined. Alternatively, every two adjacent first time domain resources in the R first time domain resources are spaced by N symbols in time domain, where N is a positive integer. N is configured by using higher layer signaling or is predefined. To be specific, the 2^{nd} time domain resource is determined at an interval of N symbols from the 1^{st} time domain resource. The rest can be deduced by analogy, so that the R first time domain resources are determined.

Optionally, whether the R first time domain resources are consecutive or are spaced by N symbols is configured by the network device by sending the higher layer signaling to the user equipment, or is predefined.

In this embodiment, the network device sends one parameter, and then, sends one piece of information related to the first information, to implicitly indicate R. Because the information related to the first information is necessary for normal communication between the network device and the terminal device, two meanings of the first parameter can be implicitly determined based on the information. Compared with directly sending two parameters, this solution can reduce signaling overheads.

In a feasible implementation, the first information includes at least one of the following information: a downlink control information DCI format, a scrambling manner of a radio network temporary identity of DCI, a start symbol of the 1^{st} time domain resource in the R first time domain resources, a length of the 1^{st} time domain resource in the R first time domain resources, a mapping type of the 1^{st} time domain resource in the R first time domain resources, and indication information carried in higher layer signaling or DCI.

Optionally, the network device sends the related information of the first information to indicate the first information. For example, the related information of the first information may be DCI. After sending the DCI, the network device may indicate a DCI format, a scrambling manner of a radio network temporary identity (radio network temporary identity, RNTI) of the DCI, a start symbol of the 1^{st} time domain resource in the R first time domain resources, a length of the 1^{st} time domain resource in the R first time domain resources, a mapping type of the 1^{st} time domain resource in the R first time domain resources, and the like.

Specifically, for a process indicating R by using the first information, refer to the foregoing description related to the terminal device. Details are not described herein again.

In a feasible implementation, the network device determines a repetition count K, where the repetition count K indicates the network device to repeatedly send K groups of uplink data channels or repeatedly receive K groups of downlink data channels, and K is a positive integer.

Specifically, the repetition count K may be determined by the network device, and indicated to the user equipment through higher layer signaling, or may be preconfigured.

The network device determines K second time domain resources based on the repetition count K and the R first time domain resources, where each second time domain resource includes the R first time domain resources. Specifically, for the repetition count K and the K second time domain resources, refer to the foregoing descriptions related to the terminal device. Details are not described herein again.

In a feasible implementation, that the network device determines K second time domain resources based on the repetition count K and the R first time domain resources includes:

The network device repeats the R first time domain resources for K times in time domain, to obtain the K second time domain resources, where every two adjacent second time domain resources are consecutive in time domain; every two adjacent second time domain resources are spaced by N symbols in time domain, where N is a positive integer; or a time-domain location relationship between every two adjacent second time domain resources is preset.

For details, refer to the foregoing description related to the terminal device. Details are not described herein again.

In a feasible implementation, that the network device determines K second time domain resources based on the repetition count K and the R first time domain resources includes:
The network device repeats the R first time domain resources for K times in time domain, where a K^{th} second time domain resource obtained through a K^{th} repetition belongs to two different slots; and the network device discards a time domain resource in the latter slot in the two different slots, and uses K-1 second time domain resources obtained through the 1^{st} to (K-1)^{th} repetitions and a remaining part of the K^{th} time domain resource as the K second time domain resources.

For details, refer to the foregoing description related to the terminal device. Details are not described herein again.

In a feasible implementation, that the network device repeatedly sends the downlink data channel for R times or repeatedly receives the uplink data channel for R times on the R first time domain resources includes:
When at least one symbol included in an X^{th} first time domain resource collides with a symbol indicated by a slot format indicator SFI, the network device stops sending the downlink data channel or receiving the uplink data channel on the X^{th} first time domain resource; the network device postpones the X^{th} first time domain resource and a first time domain resource after the X^{th} first time domain resource; or the network device stops sending the downlink data channel or receiving the uplink data channel on a collision symbol included in the X^{th} first time domain resource, where the X^{th} first time domain resource is any one of the R first time domain resources.

Specifically, the network device may send the slot format indicator (slot format indicator, SFI) to the terminal device through DCI and the like. The SFI is used to indicate uplink symbols, downlink symbols, and flexible symbols (which may be used to transmit an uplink data channel or a downlink data channel during dynamic scheduling) in one slot. To avoid a collision, some rules are defined, for example, skipping sending the downlink data channel or skipping receiving the uplink data channel on a first time domain resource on which the collision symbol is located; for another example, postponing the first time domain resource on which the collision symbol is located and a subsequent first time domain resource; and for another example, skipping sending the downlink data channel or skipping receiving the uplink data channel on the collision symbol.

In the manner described in this embodiment, some rules are defined to ensure that a transmission direction of the repeatedly sent downlink data channel or the repeatedly received uplink data channel does not collide with a direction of the symbol indicated by the SFI. Therefore, algorithm complexity caused by the network device to ensure that no collision occurs is reduced.

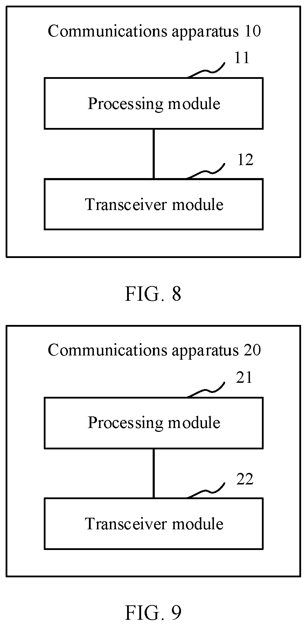

FIG. 8 is a schematic structural diagram of a communications apparatus according to an embodiment of this application. The communications apparatus in this embodiment may be a terminal device, or may be a chip applied to a terminal device. The communications apparatus may be configured to perform a function of the terminal device in the method embodiment shown in FIG. 3A, FIG. 3B, or FIG. 5. As shown in FIG. 8, the communications apparatus may include a processing module 11 and a transceiver module 12.

The processing module 11 is configured to determine R first time domain resources, where R is a positive integer; and
the transceiver module 12 is configured to send an uplink data channel or receive a downlink data channel on each of the R first time domain resources determined by the processing module 11, where the uplink data channel sent on or the downlink data channel received on each of the R first time domain resources is the same.

In a feasible design, when R≥2, a time domain interval between every two adjacent first time domain resources in the R first time domain resources is less than one slot, where the time domain interval is an interval between start symbols of every two adjacent first time domain resources.

In a feasible design, before determining the R first time domain resources, the processing module 11 is further configured to determine one piece of first time domain resource information in at least one first time domain resource, where each of the at least one piece of first time domain resource information includes R and one piece of first indication information, and the first indication information is used to indicate a start symbol and a length of the 1^{st} first time domain resource in the R first time domain resources.

In a feasible design, the processing module 11 is specifically configured to determine one piece of second time domain resource information in at least one piece of second time domain resource information, where each of the at least one piece of second time domain resource information includes R pieces of first indication information, and each piece of first indication information is used to indicate a start symbol and a length of one of the R first time domain resources.

In a feasible design, before determining the R first time domain resources, the processing module 11 is further configured to: determine one piece of third time domain resource information in at least one piece of third time domain resource information, where each of the at least one piece of third time domain resource information includes one piece of first indication information, and the first indication information is used to indicate a start symbol and a length of the 1^{st} first time domain resource in the R first time domain resources; and determine R based on the start symbol and/or the length of the 1^{st} first time domain resource that are/is indicated by the first indication information.

In a feasible design, the transceiver module 12 is further configured to receive a parameter sent by a network device; and
the processing module 11 is specifically configured to determine the R first time domain resources based on the parameter received by the transceiver module 12 and first information, where the first information is any one of information required for communication between the terminal device and the network device.

In a feasible design, before determining the R first time domain resources based on the parameter and the first information, the processing module 11 is further configured to: determine, based on the first information, that the parameter indicates R, where R is equal to the parameter; or determine, based on the first information, that R is equal to 1.

In a feasible design, the first information includes at least one of the following information: a downlink control information DCI format, a scrambling manner of a radio network temporary identity of DCI, a start symbol of the 1^{st} time domain resource in the R first time domain resources, a length of the 1^{st} time domain resource in the R first time domain resources, a mapping type of the 1^{st} time domain resource in the R first time domain resources, and indication information carried in higher layer signaling or DCI.

In a feasible design, the R first time domain resources are consecutive in time domain, or every two adjacent first time domain resources in the R first time domain resources are spaced by N symbols in time domain, where N is a positive integer.

In a feasible design, the processing module 11 is further configured to determine a repetition count K, where the repetition count K indicates the transceiver module 12 to repeatedly send K groups of uplink data channels or repeatedly receive K groups of downlink data channels, and K is a positive integer; and
the processing module 11 is further configured to determine K second time domain resources based on the repetition count K and the R first time domain resources, where each second time domain resource includes the R first time domain resources.

In a feasible design, when determining the K second time domain resources based on the repetition count K and the R first time domain resources, the processing module 11 is specifically configured to repeat the R first time domain resources for K times in time domain, to obtain the K second time domain resources, where every two adjacent second time domain resources are consecutive in time domain;
every two adjacent second time domain resources are spaced by N symbols in time domain, where N is a positive integer; or
a time-domain location relationship between every two adjacent second time domain resources is preset.

In a feasible design, when determining the K second time domain resources based on the repetition count K and the R first time domain resources, the processing module 11 is specifically configured to: repeat the R first time domain resources for K times in time domain, where a K^{th} second time domain resource obtained through a K^{th} repetition belongs to two different slots; and discard a time domain resource in the latter slot in the two different slots, and use K-1 second time domain resources obtained through the 1^{st} to (K-1)^{th} repetitions and a remaining part of the K^{th} time domain resource as the K second time domain resources.

In a feasible design, the processing module 11 is further configured to: when at least one symbol included in an X^{th} first time domain resource collides with a symbol indicated by a slot format indicator SFI, indicate the transceiver module 12 to stop sending the uplink data channel or receiving the downlink data channel on the X^{th} first time domain resource; postpone the X^{th} first time domain resource and a first time domain resource after the X^{th} first time domain resource; or indicate the transceiver module 12 to stop sending the uplink data channel or receiving the downlink data channel on the collision symbol included in the X^{th} first time domain resource, where
the X^{th} first time domain resource is any one of the R first time domain resources.

The communications apparatus provided in this embodiment of this application may perform actions of the terminal device in the foregoing method embodiments. Their implementation principles and technical effects are similar. Details are not described herein again.

FIG. 9 is a schematic structural diagram of a communications apparatus according to an embodiment of this application. The communications apparatus in this embodiment may be a network device, or may be a chip applied to a network device. The communications apparatus may be configured to perform a function of the network device in the method embodiment shown in FIG. 3A, FIG. 3B, or FIG. 5. As shown in FIG. 8, the communications apparatus may include a processing module 21 and a transceiver module 22.

The processing module 21 is configured to determine R first time domain resources, where R is a positive integer; and
the transceiver module 22 is configured to send a downlink data channel or receive an uplink data channel on each of the R first time domain resources determined by the processing module, where the downlink data channel sent on or the uplink data channel received on each of the R first time domain resources is the same.

In a feasible design, when R≥2, a time domain interval between every two adjacent first time domain resources in the R first time domain resources is less than one slot, where the time domain interval is an interval between start symbols of every two adjacent first time domain resources.

In a feasible design, before determining the R first time domain resources, the processing module 21 is further configured to determine one piece of first time domain resource information in at least one piece of first time domain resource information, where each of the at least one piece of first time domain resource information includes R and one piece of first indication information, and the first indication information is used to indicate a start symbol and a length of the 1^{st} first time domain resource in the R first time domain resources.

In a feasible design, the processing module 21 is specifically configured to determine one piece of second time domain resource information in at least one piece of second time domain resource information, where each of the at least one piece of second time domain resource information includes R pieces of first indication information, and the first indication information is used to indicate a start symbol and a length of one of the R first time domain resources.

In a feasible design, before determining the R first time domain resources, the processing module 21 is further configured to determine one piece of third time domain resource information in at least one piece of third time domain resource information, where each of the at least one piece of third time domain resource information includes one piece of first indication information, the first indication information is used to indicate a start symbol and a length of the 1^{st} first time domain resource in the R first time domain resources, and the start symbol and the length are used to indicate R.

In a feasible design, the transceiver module 22 is further configured to send a parameter to a terminal device; and
the processing module 21 is specifically configured to: determine, based on first information, that the parameter sent by the transceiver module 22 indicates R, where R is equal to the parameter; or determine, based on first information, that R is equal to 1, where the first information is any one of information required for communication between the terminal device and the network device.

In a feasible design, the first information includes at least one of the following information: a downlink control information DCI format, a scrambling manner of a radio network temporary identity of DCI, a start symbol of the 1^{st} time domain resource in the R first time domain resources, a length of the 1^{st} time domain resource in the R first time domain resources, a mapping type of the 1^{st} time domain resource in the R first time domain resources, and indication information carried in higher layer signaling or DCI.

In a feasible design, the R first time domain resources are consecutive in time domain, or every two adjacent first time domain resources in the R first time domain resources are spaced by N symbols in time domain, where N is a positive integer.

In a feasible design, the processing module 21 is further configured to: determine a repetition count K, where the repetition count K indicates the network device to repeatedly send K groups of uplink data channels or repeatedly receive K groups of downlink data channels, and K is a positive integer; and determine K second time domain resources based on the repetition count K and the R first time domain resources, where each second time domain resource includes the R first time domain resources.

In a feasible design, when determining the K second time domain resources based on the repetition count K and the R first time domain resources, the processing module 21 is specifically configured to repeat the R first time domain resources for K times in time domain, to obtain the K second time domain resources, where every two adjacent second time domain resources are consecutive in time domain;
every two adjacent second time domain resources are spaced by N symbols in time domain, where N is a positive integer; or
a time-domain location relationship between every two adjacent second time domain resources is preset.

In a feasible design, when determining the K second time domain resources based on the repetition count K and the R first time domain resources, the processing module 21 is specifically configured to: repeat the R first time domain resources for K times in time domain, where a K^{th} second time domain resource obtained through a K^{th} repetition belongs to two different slots; and discard a time domain resource in the latter slot in the two different slots, and use K-1 second time domain resources obtained through the 1^{st} to (K-1)^{th} repetitions and a remaining part of the K^{th} time domain resource as the K second time domain resources.

In a feasible design, the processing module 21 is configured to: when at least one symbol included in an X^{th} first time domain resource collides with a symbol indicated by a slot format indicator SFI, indicate the transceiver module 22 to stop sending the downlink data channel or receiving the uplink data channel on the X^{th} first time domain resource; postpone the X^{th} first time domain resource and a first time domain resource after the X^{th} first time domain resource; or indicate the transceiver module 22 to stop sending the downlink data channel or receiving the uplink data channel on a collision symbol included in the X^{th} first time domain resource, where the X^{th} first time domain resource is any one of the R first time domain resources.

The communications apparatus provided in this embodiment of this application may perform actions of the network device in the foregoing method embodiments. Their implementation principles and technical effects are similar. Details are not described herein again.

It should be noted that, in actual implementation, the transceiver module may be a transceiver. The processing module may be implemented in a form of software invoked by a processing element, or implemented in a form of hardware. For example, the processing module may be a separately disposed processing element, or may be integrated into a chip of the foregoing apparatus for implementation. In addition, the processing module may be stored in a memory of the foregoing apparatus in a form of program code, and is invoked by a processing element of the foregoing apparatus to perform a function of the processing module. In addition, all or some of the modules may be integrated together, or may be implemented independently. The processing element may be an integrated circuit with a signal processing capability. In an implementation process, steps in the methods or the modules can be implemented by using a hardware integrated logical circuit in the processing element, or by using instructions in a form of software.

For example, the foregoing modules may be configured as one or more integrated circuits for implementing the methods, such as one or more application-specific integrated circuits (application specific integrated circuit, ASIC), one or more microprocessors (digital signal processor, DSP), or one or more field programmable gate arrays (field programmable gate array, FPGA). For another example, when one of the foregoing modules is implemented in a form of scheduling program code by a processing element, the processing element may be a general-purpose processor, for example, a central processing unit (central processing unit, CPU) or another processor that can invoke the program code. For still another example, the modules may be integrated together, and implemented in a form of a system-on-a-chip (system-on-a-chip, SOC).

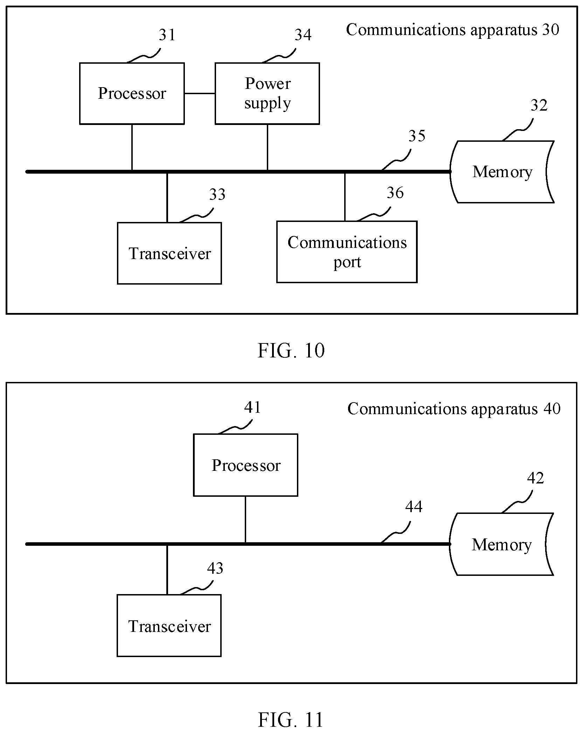

FIG. 10 is a schematic structural diagram of a communications apparatus according to an embodiment of this application. As shown in FIG. 10, the communications apparatus 30 may include a processor 31 (for example, a CPU), a memory 32, and a transceiver 33. The transceiver 33 is coupled to the processor 31, and the processor 31 controls a receiving action of the transceiver 33. The memory 32 may include a high-speed random access memory (random-access memory, RAM), or may further include a non-volatile memory (non-volatile memory, NVM), for example, at least one magnetic disk memory. The memory 32 may store various instructions to complete various processing functions and implement the method steps in this application. Optionally, the communications apparatus in this application may further include a power supply 34, a communications bus 35, and a communications port 36. The transceiver 33 may be integrated into a transceiver of the communications apparatus, or may be an independent transceiver antenna on the communications apparatus. The communications bus 35 is configured to implement communication connections between the components. The communications port 36 is configured to implement connection and communication between the communications apparatus and other peripherals.

In this embodiment of this application, the memory 32 is configured to store computer-executable program code, and the program code includes an instruction. When the processor 31 executes the instruction, the instruction enables the processor 31 of the communications apparatus to perform a processing action of the terminal device in the foregoing method embodiments, and enables the transceiver 33 to perform sending and receiving actions of the terminal device in the foregoing embodiment shown in FIG. 3A, FIG. 3B, or FIG. 5 or an optional embodiment. Their implementation principles and technical effects are similar. Details are not described herein again.

FIG. 11 is a schematic structural diagram of a communications apparatus according to an embodiment of this application. As shown in FIG. 11, the communications apparatus 40 may include a processor 41 (for example, a CPU), a memory 42, and a transceiver 43. The transceiver 43 is coupled to the processor 41, and the processor 41 controls sending and receiving actions of the transceiver 43. The memory 42 may include a high-speed random access memory (random-access memory, RAM), or may further include a non-volatile memory (non-volatile memory, NVM), for example, at least one magnetic disk memory. The memory 42 may store various instructions to complete various processing functions and implement the method steps in this application. Optionally, the communications apparatus in this application may further include a communications bus 44. The transceiver 43 may be integrated into a transceiver of the communications apparatus, or may be an independent transceiver antenna on the communications apparatus. The communications bus 44 is configured to implement communication connections between the components. The communications port 46 is configured to implement connection and communication between the communications apparatus and other peripherals.

In this embodiment of this application, the memory 42 is configured to store computer-executable program code, and the program code includes an instruction. When the processor 41 executes the instruction, the instruction enables the processor 41 of the communications apparatus to perform a processing action of the network device in the foregoing embodiments or an optional embodiment, and enables the transceiver 43 to perform a receiving action of the network device in the foregoing method embodiments. Their implementation principles and technical effects are similar. Details are not described herein again.

All or some of the foregoing embodiments may be implemented by using software, hardware, firmware, or any combination thereof. When software is used to implement the embodiments, the embodiments may be implemented all or partially in a form of a computer program product. The computer program product includes one or more computer instructions. When the computer program instructions are loaded and executed on a computer, the procedures or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid-state drive Solid State Disk (SSD)), or the like.

The tern "a plurality of' in this specification refers to two or more than two. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects. In the formula, the character "/" indicates a "division" relationship between the associated objects.

It may be understood that numerical symbols used in the embodiments of this application are merely differentiated for ease of description, but are not used to limit the scope of the embodiments of this application.

It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

## Claims

1. A data transmission method, comprising:
determining R first time domain resources, wherein R is a positive integer; and
sending an uplink data channel or receiving a downlink data channel on each of the R first time domain resources, wherein the uplink data channel sent on or the downlink data channel received on each of the R first time domain resources is the same.

2. The method according to claim 1, wherein when R≥2, a time domain interval between every two adjacent first time domain resources in the R first time domain resources is less than one slot, wherein the time domain interval is an interval between start symbols of every two adjacent first time domain resources.

3. The method according to claim 1 or 2, before the determining R first time domain resources, further comprising:
determining one piece of first time domain resource information in at least one piece of first time domain resource information, wherein each of the at least one piece of first time domain resource information comprises R and one piece of first indication information, and the first indication information is used to indicate a start symbol and a length of the 1^{st} first time domain resource in the R first time domain resources.

4. The method according to claim 1 or 2, wherein the determining R first time domain resources comprises:
determining one piece of second time domain resource information in at least one piece of second time domain resource information, wherein each of the at least one piece of second time domain resource information comprises R pieces of first indication information, and each piece of first indication information is used to indicate a start symbol and a length of one of the R first time domain resources.

5. The method according to claim 1 or 2, before the determining R first time domain resources, further comprising:
determining one piece of third time domain resource information in at least one piece of third time domain resource information, wherein each of the at least one piece of third time domain resource information comprises one piece of first indication information, and the first indication information is used to indicate a start symbol and a length of the 1^{st} first time domain resource in the R first time domain resources; and
determining R based on the start symbol and/or the length of the 1^{st} first time domain resource that are/is indicated by the first indication information.

6. The method according to claim 1 or 2, wherein the method further comprises:
receiving a parameter sent by a network device; and
the determining R first time domain resources comprises:
determining the R first time domain resources based on the parameter and first information, wherein the first information is any one of information required for communication with the network device.

7. The method according to claim 6, before the determining the R first time domain resources based on the parameter and first information, further comprising:
determining, based on the first information, that the parameter indicates R, wherein R is equal to the parameter; or determining, based on the first information, that R is equal to 1.

8. The method according to claim 6 or 7, wherein the first information comprises at least one of the following information: a downlink control information DCI format, a scrambling manner of a radio network temporary identity of DCI, a start symbol of the 1^{st} time domain resource in the R first time domain resources, a length of the 1^{st} time domain resource in the R first time domain resources, a mapping type of the 1^{st} time domain resource in the R first time domain resources, and indication information carried in higher layer signaling or DCI.

9. The method according to any one of claim 3 and claims 5 to 8, wherein the R first time domain resources are consecutive in time domain, or every two adjacent first time domain resources in the R first time domain resources are spaced by N symbols in time domain, wherein N is a positive integer.

10. A data transmission method, comprising:
determining R first time domain resources, wherein R is a positive integer; and
sending a downlink data channel or receiving an uplink data channel on each of the R first time domain resources, wherein the downlink data channel sent on or the uplink data channel received on each of the R first time domain resources is the same.

11. The method according to claim 10, wherein when R≥2, a time domain interval between every two adjacent first time domain resources in the R first time domain resources is less than one slot, wherein the time domain interval is an interval between start symbols of every two adjacent first time domain resources.

12. The method according to claim 10 or 11, before the determining R first time domain resources, further comprising:
determining one piece of first time domain resource information in at least one piece of first time domain resource information, wherein each of the at least one piece of first time domain resource information comprises R and one piece of first indication information, and the first indication information is used to indicate a start symbol and a length of the 1^{st} first time domain resource in the R first time domain resources.

13. The method according to claim 10 or 11, wherein the determining R first time domain resources comprises:
determining one piece of second time domain resource information in at least one piece of second time domain resource information, wherein each of the at least one piece of second time domain resource information comprises R pieces of first indication information, and the first indication information is used to indicate a start symbol and a length of one of the R first time domain resources.

14. The method according to claim 10 or 11, before the determining R first time domain resources, further comprising:
determining one piece of third time domain resource information in at least one piece of third time domain resource information, wherein each of the at least one piece of third time domain resource information comprises one piece of first indication information, the first indication information is used to indicate a start symbol and a length of the 1^{st} first time domain resource in the R first time domain resources, and the start symbol and the length are used to indicate R.

15. The method according to claim 10 or 11, wherein the method further comprises:
sending a parameter to a terminal device; and
determining, based on first information, that the parameter indicates R, wherein R is equal to the parameter; or determining, based on first information, that R is equal to 1, wherein the first information is any one of information required for communication with the terminal device.

16. The method according to claim 15, wherein
the first information comprises at least one of the following information: a downlink control information DCI format, a scrambling manner of a radio network temporary identity of DCI, a start symbol of the 1^{st} time domain resource in the R first time domain resources, a length of the 1^{st} time domain resource in the R first time domain resources, a mapping type of the 1^{st} time domain resource in the R first time domain resources, and indication information carried in higher layer signaling or DCI.

17. The method according to any one of claim 12 and claims 14 to 16, wherein the R first time domain resources are consecutive in time domain, or every two adjacent first time domain resources in the R first time domain resources are spaced by N symbols in time domain, wherein N is a positive integer.

18. A communications apparatus, comprising:
a processing module, configured to determine R first time domain resources, wherein R is a positive integer; and
a transceiver module, configured to send an uplink data channel or receive a downlink data channel on each of the R first time domain resources determined by the processing module, wherein the uplink data channel sent on or the downlink data channel received on each of the R first time domain resources is the same.

19. The apparatus according to claim 18, wherein when R≥2, a time domain interval between every two adjacent first time domain resources in the R first time domain resources is less than one slot, wherein the time domain interval is an interval between start symbols of every two adjacent first time domain resources.

20. The apparatus according to claim 18 or 19, wherein
before determining the R first time domain resources, the processing module is further configured to determine one piece of first time domain resource information in at least one first time domain resource, wherein each of the at least one piece of first time domain resource information comprises R and one piece of first indication information, and the first indication information is used to indicate a start symbol and a length of the 1^{st} first time domain resource in the R first time domain resources.

21. The apparatus according to claim 18 or 19, wherein
the processing module is specifically configured to determine one piece of second time domain resource information in at least one piece of second time domain resource information, wherein each of the at least one piece of second time domain resource information comprises R pieces of first indication information, and each piece of first indication information is used to indicate a start symbol and a length of one of the R first time domain resources.

22. The apparatus according to claim 18 or 19, wherein
before determining the R first time domain resources, the processing module is further configured to: determine one piece of third time domain resource information in at least one piece of third time domain resource information, wherein each of the at least one piece of third time domain resource information comprises one piece of first indication information, and the first indication information is used to indicate a start symbol and a length of the 1^{st} first time domain resource in the R first time domain resources; and determine R based on the start symbol and/or the length of the 1^{st} first time domain resource that are/is indicated by the first indication information.

23. The apparatus according to claim 18 or 19, wherein
the transceiver module is further configured to receive a parameter sent by a network device; and
the processing module is specifically configured to determine the R first time domain resources based on the parameter received by the transceiver module and first information, wherein the first information is any one of information required for communication between the terminal device and the network device.

24. The apparatus according to claim 23, wherein
before determining the R first time domain resources based on the parameter and the first information, the processing module is further configured to: determine, based on the first information, that the parameter indicates R, wherein R is equal to the parameter; or determine, based on the first information, that R is equal to 1.

25. The apparatus according to claim 23 or 24, wherein the first information comprises at least one of the following information: a downlink control information DCI format, a scrambling manner of a radio network temporary identity of DCI, a start symbol of the 1^{st} time domain resource in the R first time domain resources, a length of the 1^{st} time domain resource in the R first time domain resources, a mapping type of the 1^{st} time domain resource in the R first time domain resources, and indication information carried in higher layer signaling or DCI.

26. The apparatus according to any one of claim 20 and claims 22 to 25, wherein the R first time domain resources are consecutive in time domain, or every two adjacent first time domain resources in the R first time domain resources are spaced by N symbols in time domain, wherein N is a positive integer.

27. A communications apparatus, comprising:
a processing module, configured to determine R first time domain resources, wherein R is a positive integer; and
a transceiver module, configured to send a downlink data channel or receive an uplink data channel on each of the R first time domain resources determined by the processing module, wherein the downlink data channel sent on or the uplink data channel received on each of the R first time domain resources is the same.

28. The apparatus according to claim 27, wherein when R≥2, a time domain interval between every two adjacent first time domain resources in the R first time domain resources is less than one slot, wherein the time domain interval is an interval between start symbols of every two adjacent first time domain resources.

29. The apparatus according to claim 27 or 28, wherein
before determining the R first time domain resources, the processing module is further configured to determine one piece of first time domain resource information in at least one piece of first time domain resource information, wherein each of the at least one piece of first time domain resource information comprises R and one piece of first indication information, and the first indication information is used to indicate a start symbol and a length of the 1^{st} first time domain resource in the R first time domain resources.

30. The apparatus according to claim 27 or 28, wherein
the processing module is specifically configured to determine one piece of second time domain resource information in at least one piece of second time domain resource information, wherein each of the at least one piece of second time domain resource information comprises R pieces of first indication information, and the first indication information is used to indicate a start symbol and a length of one of the R first time domain resources.

31. The apparatus according to claim 27 or 28, wherein
before determining the R first time domain resources, the processing module is further configured to determine one piece of third time domain resource information in at least one piece of third time domain resource information, wherein each of the at least one piece of third time domain resource information comprises one piece of first indication information, the first indication information is used to indicate a start symbol and a length of the 1^{st} first time domain resource in the R first time domain resources, and the start symbol and the length are used to indicate R.

32. The apparatus according to claim 27 or 28, wherein
the transceiver module is further configured to send a parameter to a terminal device; and
the processing module is specifically configured to: determine, based on first information, that the parameter indicates R, wherein R is equal to the parameter; or determine, based on first information, that R is equal to 1, wherein the first information is any one of information required for communication between the terminal device and the network device.

33. The apparatus according to claim 32, wherein
the first information comprises at least one of the following information: a downlink control information DCI format, a scrambling manner of a radio network temporary identity of DCI, a start symbol of the 1^{st} time domain resource in the R first time domain resources, a length of the 1^{st} time domain resource in the R first time domain resources, a mapping type of the 1^{st} time domain resource in the R first time domain resources, and indication information carried in higher layer signaling or DCI.

34. The apparatus according to any one of claim 29 and claims 31 to 33, wherein the R first time domain resources are consecutive in time domain, or every two adjacent first time domain resources in the R first time domain resources are spaced by N symbols in time domain, wherein N is a positive integer.

35. A computer-readable storage medium, configured to store a computer program or an instruction, wherein when the computer program or the instruction is run on a computer, the computer is enabled to perform the method according to any one of claims 1 to 9.

36. A computer-readable storage medium, configured to store a computer program or an instruction, wherein when the computer program or the instruction is run on a computer, the computer is enabled to perform the method according to any one of claims 10 to 17.

37. A computer program product, wherein when the computer program product runs on a computer, the computer is enabled to perform the method according to any one of claims 1 to 9.

38. A computer program product, wherein when the computer program product runs on a computer, the computer is enabled to perform the method according to any one of claims 10 to 17.

39. A communications apparatus, comprising a processor and a communications interface, wherein the communications interface is configured to: receive a signal from another communications apparatus other than the communications apparatus, and transmit the signal to the processor; or send a signal from the processor to another communications apparatus other than the communications apparatus; and the processor is configured to: implement the method according to any one of claims 1 to 9 or 10 to 17 by using a logic circuit or an executable code instruction.
